# EUROPEAN PATENT APPLICATION

(11) **EP 4 586 724 A1**
(43) Date of publication of application: **16.07.2025**
(21) Application number: 23870498.5
(22) Date of filing: 19.09.2023
(51) Int. Cl.: H04W 72/25

(54) **COMMUNICATION METHOD, APPARATUS AND SYSTEM**

(30) Priority: 29.09.2022 CN 202211205060
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); LIU, Jun, Shenzhen, Guangdong 518129 (CN)
(74) Representative: Pfenning, Meinig & Partner mbB
(86) International application number: PCT/CN2023/119830
(87) International publication number: WO 2024/067266

(57) **Abstract**

This application relates to a communication method, apparatus, and system. A first terminal device determines at least one sidelink control element based on carrier information. The carrier information includes information about a carrier corresponding to the at least one sidelink control element. The first terminal device determines a first destination address based on the at least one sidelink control element, and then determines a first logical channel and/or a first sidelink control element based on the first destination address. In embodiments of this application, a part of sidelink control elements are selected from a to-be-sent sidelink control element based on the carrier information, and the selected sidelink control elements may participate in an SL LCP process, for example, participate in determining the first destination address, while an unselected sidelink control element may not participate in determining the first destination address. Due to the screening process, the finally determined first sidelink control element is probably a sidelink control element determined based on the carrier information, so that a reception end can determine a carrier corresponding to the first sidelink control element, thereby improving sidelink communication quality.

## Description

### CROSS-REFERENCE TO RELATED APPLICATIONS

This application claims priority to Chinese Patent Application No. 202211205060.8, filed with the China National Intellectual Property Administration on September 29, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In sidelink (sidelink, SL) communication, one user equipment (user equipment, UE) may send an SL medium access control (media access control, MAC) control element (control element, CE) to another UE. Information included in some legacy SL MAC CEs is specific to a carrier, because currently, only single-carrier communication is supported in an SL scenario. When multi-carrier communication is considered in the SL scenario, if a current manner is still used, after receiving an SL MAC CE, a reception end UE cannot determine a carrier to which information included in the SL MAC CE is specific, which affects function implementation of the SL MAC CE. Consequently, an information indication error may be caused, and SL communication quality may be reduced.

### SUMMARY

Embodiments of this application provide a communication method, apparatus, and system, to improve SL communication quality.

According to a first aspect, a first communication method is provided. The method may be performed by a terminal device, or may be performed by another device including a terminal device function, or may be performed by a chip system (or a chip) or another functional module. The chip system or the functional module can implement a function of the terminal device, and is, for example, disposed in the terminal device. The terminal device is, for example, a first terminal device. The method includes: determining at least one sidelink control element based on carrier information, where the carrier information includes information about a carrier corresponding to the at least one sidelink control element, and one or more of the at least one sidelink control element are medium access control control elements; determining a first destination address based on the at least one sidelink control element; and determining a first logical channel and/or a first sidelink control element based on the first destination address.

Before performing an initial sidelink transmission, the first terminal device may perform an SL logical channel prioritization (logical channel prioritization, LCP) process, to determine to-be-sent information to which a resource used to perform the initial sidelink transmission is allocated. In this embodiment of this application, the first terminal device may determine the at least one sidelink control element based on the carrier information, so that the at least one sidelink control element can participate in the SL LCP process. This is equivalent to that in this embodiment of this application, the at least one sidelink control element is selected from a to-be-sent sidelink control element based on the carrier information, and the selected at least one sidelink control element may participate in the SL LCP process, for example, participate in determining the first destination address, while an unselected sidelink control element may not participate in determining the first destination address. Therefore, the first sidelink control element determined based on the first destination address probably belongs to the at least one sidelink control element, or in other words, is determined based on the carrier information. If the first sidelink control element is also determined based on the carrier information, after receiving the first sidelink control element, a reception end can determine a carrier corresponding to information included in the first sidelink control element, thereby reducing a probability of an indication error and improving sidelink communication quality.

In an optional implementation, the first sidelink control element belongs to the at least one sidelink control element. For example, the first sidelink control element determined through the SL LCP process may be one of the at least one sidelink control element. Because the first sidelink control element is determined based on the carrier information, after receiving the first sidelink control element, a reception end can determine a carrier corresponding to information included in the first sidelink control element, thereby reducing a probability of an indication error and improving sidelink communication quality.

In an optional implementation, the determining at least one sidelink control element based on carrier information includes: determining the at least one sidelink control element based on the carrier information and a first sidelink resource. The first sidelink resource is a resource used for sidelink transmission. The first terminal device may determine the at least one sidelink control element based on the carrier information and the first sidelink resource, so that the at least one sidelink control element is associated with the first sidelink resource, and a reception end may determine, based on a sidelink resource on which a sidelink control element is received, a carrier corresponding to the sidelink control element.

In an optional implementation, the determining the at least one sidelink control element based on the carrier information and a first sidelink resource includes: determining that a carrier on which the first sidelink resource is located includes the carrier corresponding to the at least one sidelink control element; and/or determining that the carrier corresponding to the at least one sidelink control element and the carrier on which the first sidelink resource is located are a same carrier. For example, the carrier on which the first sidelink resource is located includes the carrier corresponding to the at least one sidelink control element, or the carrier corresponding to the at least one sidelink control element and the carrier on which the first sidelink resource is located are a same carrier. After receiving a sidelink control element, a reception end can determine, based on a carrier on which the sidelink control element is received, a carrier corresponding to the sidelink control element, thereby reducing a probability of an indication error and improving sidelink communication quality.

In an optional implementation, the at least one sidelink control element includes a second sidelink control element. A carrier corresponding to the second sidelink control element is a carrier used to transmit SCI. Alternatively, the carrier corresponding to the second sidelink control element is a carrier on which SL transmission scheduled by the SCI is located. The SCI indicates the first terminal device to send a sidelink CSI report, and the sidelink CSI report is included in the second sidelink control element. For example, in a case of same-carrier scheduling, a carrier for transmitting the SCI is a carrier for transmitting the second sidelink control element. Therefore, in the case of same-carrier scheduling, the carrier corresponding to the second sidelink control element may be the carrier used to transmit the SCI, or may be the carrier on which SL transmission scheduled by the SCI is located. The carrier on which SL transmission scheduled by the SCI is located is a carrier on which the second sidelink control element is located. The SL transmission scheduled by the SCI is, for example, SL CSI reporting. For another example, in a case of cross-carrier scheduling, the carrier for transmitting the SCI is not necessarily the carrier for transmitting the second sidelink control element. Therefore, in the case of cross-carrier scheduling, the carrier corresponding to the second sidelink control element may be the carrier on which SL transmission scheduled by the SCI is located.

In an optional implementation, the at least one sidelink control element includes a second sidelink control element. A carrier corresponding to the second sidelink control element is a carrier on which a resource pool associated with assistance information is located. Alternatively, the carrier corresponding to the second sidelink control element is a carrier on which a resource pool in which a sidelink resource indicated by the assistance information is located is located. Alternatively, the carrier corresponding to the second sidelink control element is a carrier used to transmit the assistance information. The assistance information is included in the second sidelink control element. Optionally, the assistance information may assist a reception end (for example, a second terminal device) of the assistance information in selecting an SL resource. The assistance information is, for example, inter-user-equipment coordination information (inter-UE coordination Information, IUC information), or may be other information. For example, if the first terminal device sends the IUC information to the second terminal device based on an IUC request from the second terminal device, a resource pool associated with the IUC information is, for example, a transmission resource pool in which a sidelink resource used to send the IUC request is located, and is referred to as, for example, a resource pool A. In this case, a resource pool in which a sidelink resource indicated by the IUC information is located and the resource pool A may be a same resource pool. Therefore, a carrier on which the resource pool associated with the IUC information is located and a carrier on which the resource pool in which the sidelink resource indicated by the IUC information is located is located may be a same carrier. A sidelink resource used to transmit the IUC information may also be a resource in the resource pool A. Therefore, a carrier used to transmit the IUC information and a carrier on which the transmission resource pool is located may also be a same carrier. For another example, the second terminal device does not send an IUC request to the first terminal device, but the first terminal device sends the IUC information to the second terminal device as triggered by another condition. In this case, the resource pool associated with the IUC information is, for example, preconfigured, and is referred to as, for example, a resource pool B. In this case, the resource pool in which the sidelink resource indicated by the IUC information is located and the resource pool B may be a same resource pool. The sidelink resource used to transmit the IUC information may also be a resource in the resource pool B. Therefore, the carrier used to transmit the IUC information and a carrier on which the resource pool B is located may also be a same carrier.

In an optional implementation, the at least one sidelink control element includes a second sidelink control element. A carrier corresponding to the second sidelink control element is a carrier on which a resource pool associated with an assistance request is located. Alternatively, the carrier corresponding to the second sidelink control element is a carrier on which a resource pool in which a sidelink resource indicated by the assistance request is located is located. Alternatively, the carrier corresponding to the second sidelink control element is a carrier used to transmit the assistance request. The assistance request is included in the second sidelink control element, and the assistance request is used to request a reception end of the second sidelink control element to send assistance information. Optionally, the assistance request is, for example, an IUC request, and the IUC request may be used to request the reception end of the second sidelink control element to send IUC information. For example, the first terminal device may send an IUC request to another terminal device (for example, a second terminal device), to request to obtain IUC information. A resource pool associated with the IUC request is, for example, a transmission resource pool in which a sidelink resource used to send the IUC request is located, and is referred to as, for example, a resource pool C. In addition to requesting to obtain the IUC information, the IUC request may further indicate a corresponding sidelink resource. For example, the sidelink resource indicated by the IUC request is also included in the resource pool C. Therefore, a carrier on which the resource pool associated with the IUC request is located and a carrier on which the resource pool in which the sidelink resource indicated by the IUC request is located is located may be a same carrier. In addition, a sidelink resource used to transmit the IUC request may also be a sidelink resource in the resource pool C. Therefore, the carrier on which the resource pool associated with the IUC request is located and a carrier used to transmit the IUC request may also be a same carrier.

In an optional implementation, the determining a first destination address based on the at least one sidelink control element includes: determining the first destination address based on a priority of the at least one sidelink control element. Optionally, the determining the first destination address based on a priority of the at least one sidelink control element includes: determining the first destination address based on the priority of the at least one sidelink control element and a priority of a to-be-sent logical channel. For example, the first terminal device may determine a destination address associated with a sidelink control element and/or logical channel with a highest priority in the at least one sidelink control element and the to-be-sent logical channel as the first destination address.

In an optional implementation, the method further includes: allocating the first sidelink resource to the first logical channel and/or the first sidelink control element, where the first sidelink resource is a resource used for sidelink transmission; and sending the first logical channel and/or the first sidelink control element. The first sidelink resource is a resource used for a current sidelink transmission. Therefore, the first terminal device may allocate the first sidelink resource to the first logical channel and/or the first sidelink control element, to transmit the first logical channel and/or the first sidelink control element.

In an optional implementation, the method further includes: performing carrier reselection or carrier selection to re-determine a carrier. In another possibility, the first terminal device cannot determine the at least one sidelink control element based on the carrier information. For example, if the carrier on which the first sidelink resource is located does not include a carrier corresponding to any to-be-sent sidelink control element, and the carrier corresponding to the to-be-sent sidelink control element and the carrier on which the first sidelink resource is located are not a same carrier, the first terminal device cannot determine the at least one sidelink control element. In this case, optionally, the first terminal device may perform carrier reselection or carrier selection to re-determine a carrier. After re-determining the carrier, the first terminal device may obtain a sidelink resource on the carrier for sidelink transmission. Because the carrier is re-determined, the first terminal device may determine a sidelink control element based on carrier information, so that the solution in this embodiment of this application can be performed.

In an optional implementation, the re-determined carrier includes the carrier corresponding to the at least one sidelink control element. For example, the carrier re-determined by the first terminal device may include a carrier corresponding to at least one sidelink control element. In this way, the first terminal device can determine a sidelink control element based on carrier information and a sidelink resource on the re-determined carrier, so that the method in this embodiment of this application can be performed.

In an optional implementation, the carrier reselection or selection process is completed in first duration, the first duration is duration corresponding to a first timer, and the first timer indicates a validity period of a sidelink control element. The carrier reselection or carrier selection process may be completed within a validity period of a sidelink control element, to reduce an information transmission latency.

In an optional implementation, the carrier reselection or selection process is completed in second duration, the second duration is duration corresponding to a second timer, the duration corresponding to the second timer is greater than duration corresponding to a first timer, and the first timer indicates a validity period of a sidelink control element. Considering that the carrier reselection or carrier selection process may require a long time, if the first timer is used for timing, the first terminal device probably cannot complete carrier reselection or carrier selection within the duration corresponding to the first timer. Therefore, the first terminal device may maintain the second timer (the second terminal device may also maintain the second timer), so that the first terminal device has as much time as possible to perform carrier reselection or carrier selection, and a probability that a sidelink control element is invalid (for example, the sidelink control element is valid during running of the second timer) can be reduced.

In an optional implementation, the method further includes: determining, based on the carrier information, that a format of the first sidelink control element is a first format. In the first format, the first sidelink control element does not include information about a resource corresponding to the first sidelink control element. A reception end can determine, based on a carrier carrying the first sidelink control element, a carrier corresponding to the first sidelink control element, so that no additional indication needs to be added to the first sidelink control element. Therefore, the first sidelink control element may be in the first format, to achieve better compatibility with conventional technologies, and simplify implementation of the first sidelink control element.

According to a second aspect, a second communication method is provided. The method may be performed by a terminal device, or may be performed by another device including a terminal device function, or may be performed by a chip system (or a chip) or another functional module. The chip system or the functional module can implement a function of the terminal device, and is, for example, disposed in the terminal device. The terminal device is, for example, a first terminal device. The method includes: determining a first destination address based on a to-be-sent logical channel and/or sidelink control element; and determining, based on carrier information, a first sidelink control element from a sidelink control element associated with the first destination address. The carrier information includes information about a carrier corresponding to the first sidelink control element, and the first sidelink control element is a medium access control control element. In this embodiment of this application, the first terminal device may determine the first sidelink control element based on the carrier information in the second step of SL LCP. For example, the first terminal device sends the first sidelink control element to a second terminal device, and after receiving the first sidelink control element, the second terminal device can determine the carrier corresponding to the first sidelink control element, or determine a carrier corresponding to information included in the first sidelink control element. In this way, even in a multi-carrier SL scenario, a reception end can still determine a carrier corresponding to a received sidelink control element, thereby reducing a carrier indication error probability of the sidelink control element, and improving sidelink communication quality.

In an optional implementation, the determining, based on carrier information, a first sidelink control element from a sidelink control element associated with the first destination address includes: determining, based on the carrier information and a first sidelink resource, the first sidelink control element from the sidelink control element associated with the first destination address.

In an optional implementation, the determining, based on the carrier information and a first sidelink resource, the first sidelink control element from the sidelink control element associated with the first destination address includes: determining that a carrier on which the first sidelink resource is located includes the carrier corresponding to the first sidelink control element; and/or determining that the carrier corresponding to the first sidelink control element and the carrier on which the first sidelink resource is located are a same carrier.

In an optional implementation, the carrier corresponding to the first sidelink control element is a carrier used to transmit SCI. Alternatively, the carrier corresponding to the first sidelink control element is a carrier on which SL transmission scheduled by the SCI is located. The SCI indicates the first terminal device to send a sidelink CSI report, and the sidelink CSI report is included in the first sidelink control element.

In an optional implementation, the carrier corresponding to the first sidelink control element is a carrier on which a resource pool associated with assistance information is located. Alternatively, the carrier corresponding to the first sidelink control element is a carrier on which a resource pool in which a sidelink resource indicated by the assistance information is located is located. Alternatively, the carrier corresponding to the first sidelink control element is a carrier used to transmit the assistance information. The assistance information is included in the first sidelink control element. Optionally, the assistance information may assist a reception end (for example, a second terminal device) of the assistance information in selecting an SL resource. The assistance information is, for example, IUC information, or may be other information.

In an optional implementation, the carrier corresponding to the first sidelink control element is a carrier on which a resource pool associated with an assistance request is located. Alternatively, the carrier corresponding to the first sidelink control element is a carrier on which a resource pool in which a sidelink resource indicated by the assistance request is located is located. Alternatively, the carrier corresponding to the first sidelink control element is a carrier used to transmit the assistance request. The assistance request is included in the first sidelink control element, and the assistance request is used to request a reception end of the first sidelink control element to send assistance information. Optionally, the assistance request is, for example, an IUC request, and the IUC request may be used to request the reception end of the second sidelink control element to send IUC information.

In an optional implementation, the determining a first destination address based on a to-be-sent logical channel and/or sidelink control element includes: determining the first destination address based on a priority of the to-be-sent logical channel and/or sidelink control element.

In an optional implementation, the method further includes: allocating the first sidelink resource to the first sidelink control element, where the first sidelink resource is a resource used for sidelink transmission; and sending the first sidelink control element.

In an optional implementation, the method further includes: performing carrier reselection or carrier selection to re-determine a carrier.

In an optional implementation, the re-determined carrier includes the carrier corresponding to the first sidelink control element.

In an optional implementation, the carrier reselection or selection process is completed in first duration, the first duration is duration corresponding to a first timer, and the first timer indicates a validity period of the first sidelink control element.

In an optional implementation, the carrier reselection or selection process is completed in second duration, the second duration is duration corresponding to a second timer, the duration corresponding to the second timer is greater than duration corresponding to a first timer, and the first timer indicates a validity period of the first sidelink control element.

In an optional implementation, the method further includes: determining, based on the carrier information, that a format of the first sidelink control element is a first format. In the first format, the first sidelink control element does not include information about a resource corresponding to the first sidelink control element.

For technical effects brought by the optional implementations of the second aspect, refer to the descriptions of technical effects of corresponding implementations of the first aspect.

According to a third aspect, a third communication method is provided. The method may be performed by a terminal device, or may be performed by another device including a terminal device function, or may be performed by a chip system (or a chip) or another functional module. The chip system or the functional module can implement a function of the terminal device, and is, for example, disposed in the terminal device. The terminal device is, for example, a first terminal device. The method includes: determining a sidelink control element. The sidelink control element includes first information, and the sidelink control element further includes information about a resource corresponding to the sidelink control element. In this embodiment of this application, a second terminal device can determine, based on the information that is included in the sidelink control element and that is about the resource corresponding to the sidelink control element, the resource corresponding to the sidelink control element, thereby reducing a probability of an indication error and improving sidelink transmission quality. In addition, a constraint relationship between transmission of a sidelink control element and a carrier is removed. For example, a sidelink control element corresponding to a carrier 1 may be transmitted on the carrier 1, or may be transmitted on another carrier, so that transmission of the sidelink control element is more flexible.

In an optional implementation, the method further includes: sending the sidelink control element by using a first sidelink resource. For example, if the first sidelink resource is sufficient to send the sidelink control element (or sufficient to send the sidelink control element and a subheader (subheader) of the sidelink control element), the first terminal device may send the sidelink control element by using the first sidelink resource. Otherwise, the first terminal device may not be capable of sending the sidelink control element.

In an optional implementation, the resource corresponding to the sidelink control element is a carrier or a resource pool.

In an optional implementation, the first information is a sidelink CSI report, assistance information, or an assistance request. Optionally, the assistance request is, for example, an IUC request, and the assistance information is, for example, IUC information.

In an optional implementation, a carrier corresponding to the sidelink control element is a carrier used to transmit SCI. Alternatively, the carrier corresponding to the sidelink control element is a carrier on which a sidelink resource scheduled by the SCI is located. The SCI indicates the first terminal device to send a sidelink CSI report, the first information is the sidelink CSI report, and the resource corresponding to the sidelink control element is a carrier.

In an optional implementation, a carrier corresponding to the sidelink control element is a carrier on which a resource pool associated with assistance information is located. Alternatively, the carrier corresponding to the sidelink control element is a carrier on which a resource pool in which a sidelink resource indicated by the assistance information is located is located. Alternatively, the carrier corresponding to the sidelink control element is a carrier used to transmit the assistance information. The first information is the assistance information, and the resource corresponding to the sidelink control element is a carrier. Optionally, the assistance information may assist a reception end (for example, a second terminal device) of the assistance information in selecting an SL resource. The assistance information is, for example, IUC information, or may be other information.

In an optional implementation, a resource pool corresponding to the sidelink control element is a resource pool associated with assistance information. Alternatively, the resource pool corresponding to the sidelink control element is a resource pool in which a sidelink resource indicated by the assistance information is located. Alternatively, the resource pool corresponding to the sidelink control element is a resource pool used to transmit the assistance information. The first information is the assistance information, and the resource corresponding to the sidelink control element is a resource pool. For descriptions of the assistance information, refer to the foregoing descriptions.

In an optional implementation, a carrier corresponding to the sidelink control element is a carrier on which a resource pool associated with an assistance request is located. Alternatively, the carrier corresponding to the sidelink control element is a carrier on which a resource pool in which a sidelink resource indicated by the assistance request is located is located. Alternatively, the carrier corresponding to the sidelink control element is a carrier used to transmit the assistance request. The first information is the assistance request, and the resource corresponding to the sidelink control element is a carrier. For descriptions of the assistance request, refer to the foregoing descriptions.

In an optional implementation, a resource pool corresponding to the sidelink control element is a resource pool associated with an assistance request. Alternatively, the resource pool corresponding to the sidelink control element is a resource pool in which a sidelink resource indicated by the assistance request is located. Alternatively, the resource pool corresponding to the sidelink control element is a resource pool used to transmit the assistance request. The first information is the assistance request, and the resource corresponding to the sidelink control element is a resource pool. For descriptions of the assistance request, refer to the foregoing descriptions.

In an optional implementation, that the sidelink control element further includes information about a resource corresponding to the sidelink control element includes: The sidelink control element includes an index of the resource corresponding to the sidelink control element. Alternatively, the sidelink control element includes a bitmap, and a bit included in the bitmap corresponds to the resource corresponding to the sidelink control element. The sidelink control element may include the index of the corresponding resource, so that indication is clear. Alternatively, the sidelink control element may indicate, by using the bitmap, the resource corresponding to the sidelink control element. In this way, an information amount of the sidelink control element can be reduced, thereby reducing transmission overheads.

In an optional implementation, the method further includes: determining, based on carrier information, that a format of the sidelink control element is a second format. In the second format, the sidelink control element includes information about the resource corresponding to the sidelink control element. A resource (for example, a carrier) used to transmit the sidelink control element is not necessarily the resource corresponding to the sidelink control element. Therefore, a reception end needs to determine, from additional indication, the resource corresponding to the sidelink control element. In this embodiment of this application, the sidelink control element may be in the second format, and the sidelink control element may include the resource corresponding to the sidelink control element, so that the reception end can determine the resource corresponding to the sidelink control element, thereby reducing a probability of an indication error.

In an optional implementation, the carrier information includes information about the carrier corresponding to the sidelink control element, and/or includes a quantity of carriers used for communication between a transmission end and a reception end of the sidelink control element.

In an optional implementation, the determining a format of the sidelink control element based on carrier information includes a manner a, a manner b, or a manner c. The manner a is: if a carrier on which the first sidelink resource is located includes the carrier corresponding to the sidelink control element, determining that the format of the sidelink control element is the first format, or otherwise, determining that the format of the sidelink control element is the second format. The manner b is: if the carrier corresponding to the sidelink control element and the carrier on which the first sidelink resource is located are a same carrier, determining that the format of the sidelink control element is the first format, or otherwise, determining that the format of the sidelink control element is the second format. The manner c is: if the quantity of carriers used for communication between the transmission end and the reception end of the sidelink control element is 1, determining that the format of the sidelink control element is the first format, or otherwise, determining that the format of the sidelink control element is the second format. Herein, three format determining manners are provided. Optionally, if the manner c is used for determining, if the quantity of carriers between the transmission end and the reception end is greater than 1, it may be directly determined that the format of the sidelink control element is the second format, or the format of the sidelink control element may be determined in either the manner a or the manner b.

For technical effects brought by the optional implementations of the third aspect, refer to the descriptions of technical effects of corresponding implementations of the first aspect.

According to a fourth aspect, a fourth communication method is provided. The method may be performed by a terminal device, or may be performed by another device including a terminal device function, or may be performed by a chip system (or a chip) or another functional module. The chip system or the functional module can implement a function of the terminal device, and is, for example, disposed in the terminal device. The terminal device is, for example, a first terminal device. The method includes: determining, based on carrier information, whether a format of a sidelink control element is a first format or a second format; and sending the sidelink control element by using a first sidelink resource. When the format of the sidelink control element is the second format, the sidelink control element includes information about a resource corresponding to the sidelink control element. In this embodiment of this application, the first terminal device may determine the format of the sidelink control element in a corresponding manner, so that the sidelink control element can be in a more appropriate format. Optionally, a second terminal device may also determine a format of a sidelink control element in a same manner as the first terminal device. Therefore, the first terminal device and the second terminal device may have a same understanding of the format of the sidelink control element, thereby reducing a probability of an indication error.

In an optional implementation, when the format of the sidelink control element is the first format, the sidelink control element does not include the information about the resource corresponding to the sidelink control element. If the format of the sidelink control element is the first format, implementation of the sidelink control element can be simplified, and better compatibility with conventional technologies can be achieved.

In an optional implementation, the carrier information includes information about a carrier corresponding to the sidelink control element, and/or includes a quantity of carriers used for communication between a transmission end and a reception end of the sidelink control element.

In an optional implementation, the determining a format of a sidelink control element based on carrier information includes: if a carrier on which the first sidelink resource is located includes the carrier corresponding to the sidelink control element, determining that the format of the sidelink control element is the first format, or otherwise, determining that the format of the sidelink control element is the second format; or if the carrier corresponding to the sidelink control element and the carrier on which the first sidelink resource is located are a same carrier, determining that the format of the sidelink control element is the first format, or otherwise, determining that the format of the sidelink control element is the second format; or if the quantity of carriers used for communication between the transmission end and the reception end of the sidelink control element is 1, determining that the format of the sidelink control element is the first format, or otherwise, determining that the format of the sidelink control element is the second format.

In an optional implementation, the carrier corresponding to the sidelink control element is a carrier used to transmit SCI. Alternatively, the carrier corresponding to the sidelink control element is a carrier on which a sidelink resource scheduled by the SCI is located. The SCI is used to request a transmission end of the sidelink control element to send a sidelink CSI report, and the sidelink CSI report is included in the sidelink control element.

In an optional implementation, the carrier corresponding to the sidelink control element is a carrier on which a resource pool associated with assistance information is located. Alternatively, the carrier corresponding to the sidelink control element is a carrier on which a resource pool in which a sidelink resource indicated by the assistance information is located is located. Alternatively, the carrier corresponding to the sidelink control element is a carrier used to transmit the assistance information. The assistance information is included in the sidelink control element. Optionally, the assistance information may assist a reception end (for example, a second terminal device) of the assistance information in selecting an SL resource. The assistance information is, for example, IUC information, or may be other information.

In an optional implementation, the carrier corresponding to the sidelink control element is a carrier on which a resource pool associated with an assistance request is located. Alternatively, the carrier corresponding to the sidelink control element is a carrier on which a resource pool in which a sidelink resource indicated by the assistance request is located is located. Alternatively, the carrier corresponding to the sidelink control element is a carrier used to transmit the assistance request. The assistance request is included in the sidelink control element, the assistance request is used to request a reception end of the sidelink control element to send assistance information, and the assistance information may assist the first terminal device in selecting an SL resource. Optionally, the assistance request is, for example, an IUC request, and the assistance information is, for example, IUC information.

In an optional implementation, the resource corresponding to the sidelink control element is a carrier or a resource pool.

For technical effects brought by some optional implementations of the fourth aspect, refer to the descriptions of technical effects of corresponding implementations of the first aspect, and/or refer to the descriptions of technical effects of corresponding implementations of the third aspect.

According to a fifth aspect, a communication apparatus is provided. The communication apparatus may be the first terminal device according to any one of the first aspect to the fourth aspect. The communication apparatus has a function of the first terminal device. The communication apparatus is, for example, the first terminal device, a larger device including the first terminal device, or a functional module in the first terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine at least one sidelink control element based on carrier information. The carrier information includes information about a carrier corresponding to the at least one sidelink control element, and each of the at least one sidelink control element is a medium access control control element. The processing unit is further configured to determine a first destination address based on the at least one sidelink control element. The processing unit is further configured to determine a first logical channel and/or a first sidelink control element based on the first destination address.

In an optional implementation, the processing unit is configured to determine a first destination address based on a to-be-sent logical channel and/or sidelink control element. The processing unit is further configured to determine, based on carrier information, a first sidelink control element from a sidelink control element associated with the first destination address. The carrier information includes information about a carrier corresponding to the first sidelink control element, and the first sidelink control element is a medium access control control element.

In an optional implementation, the processing unit is configured to determine a sidelink control element. The sidelink control element includes first information, and the sidelink control element further includes information about a resource corresponding to the sidelink control element. The transceiver unit (or the sending unit) is configured to send the sidelink control element by using a first sidelink resource.

In an optional implementation, the processing unit is configured to determine, based on carrier information, whether a format of a sidelink control element is a first format or a second format. The transceiver unit (or the sending unit) is configured to send the sidelink control element by using a first sidelink resource. When the format of the sidelink control element is the second format, the sidelink control element includes information about a resource corresponding to the sidelink control element.

In an optional implementation, the communication apparatus further includes a storage unit (sometimes also referred to as a storage module). The processing unit is configured to be coupled to the storage unit, and execute a program or instructions in the storage unit, to enable the communication apparatus to perform a function of the first terminal device according to any one of the first aspect to the fourth aspect.

According to a sixth aspect, a communication apparatus is provided. The communication apparatus may be a first terminal device, or a chip or a chip system disposed in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a seventh aspect, a communication system is provided, including a first terminal device. The first terminal device is configured to perform the method performed by the first terminal device according to any one of the first aspect to the fourth aspect.

According to an eighth aspect, a computer-readable storage medium is provided. The computer-readable storage medium is configured to store a computer program or instructions. When the computer program or the instructions are run, the method performed by the first terminal device in the foregoing aspects is implemented.

According to a ninth aspect, a computer program product including instructions is provided. When the instructions are run on a computer, the method according to the foregoing aspects is implemented.

According to a tenth aspect, a chip system is provided, including a processor and an interface. The processor is configured to invoke instructions from the interface and run the instructions, to enable the chip system to implement the method according to the foregoing aspects.

### BRIEF DESCRIPTION OF DRAWINGS

FIG. 1 is a flowchart of a reporting process of an SL CSI report;
FIG. 2 is a flowchart of an IUC mechanism;
FIG. 3 is a diagram of a network architecture to which an embodiment of this application is applied;
FIG. 4 is a flowchart of a first communication method according to an embodiment of this application;
FIG. 5 is a flowchart of a second communication method according to an embodiment of this application;
FIG. 6 is a flowchart of a third communication method according to an embodiment of this application;
FIG. 7A and FIG. 7B are diagrams of two formats of an SL MAC CE according to an embodiment of this application;
FIG. 8 is a flowchart of a fourth communication method according to an embodiment of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns represents "a singular noun or a plural noun", that is, "one or more". The term "at least one" means one or more, and "a/the plurality of" means two or more. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects. For example, A/B represents A or B. The expression "at least one of the following items (pieces)" or a similar expression thereof indicates any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but are not intended to limit sizes, content, an order, a time sequence, priorities, importance degrees, or the like of the plurality of objects. In addition, step numbers in embodiments described in this application are merely intended to distinguish between different steps, but are not intended to limit an order of the steps. For example, S401 may be performed before S402, or may be performed after S402, or may be simultaneously performed with S402.

The following describes a part of terms or concepts in embodiments of this application, to facilitate understanding of a person skilled in the art.

In embodiments of this application, a terminal device is a device with a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. The terminal device is configured to connect persons, objects, machines, and the like, and may be widely used in various scenarios, including, for example but not limited to, terminal devices the following scenarios: cellular communication, device-to-device (device-to-device, D2D) communication, V2X, machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, and a robot. The terminal device sometimes may be referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device with a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement a mobility management function, a data processing function, a session management function, a policy and charging function, and the like. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a network device function may be a network device, or may be an apparatus that can support the network device in implementing the function, for example, a chip system. The apparatus may be installed in the network device. In technical solutions provided in embodiments of this application, the technical solutions provided in embodiments of this application are described by using an example in which the apparatus configured to implement the network device function is a network device.

In embodiments of this application, UEs may communicate with each other by using one or more carriers. For example, an SL carrier aggregation (carrier aggregation, CA) technology may be introduced, so that UEs can communicate with each other on an SL by using more than one carrier. For example, a UE may use more than one carrier to send a broadcast or multicast message, or the UE may use more than one carrier to perform unicast communication with another UE. Different data may be sent on different carriers, so that a data rate on the SL can be increased. Alternatively, same data may be sent on different carriers. For example, a duplication (duplication) mechanism may be used, and duplicate data may be transmitted on different carriers, to improve data transmission reliability. The carrier in embodiments of this application may be understood as an SL carrier.

The technical solutions provided in embodiments of this application may be applied to a 4th generation mobile communication technology (4th generation, 4G) system, for example, a long term evolution (long term evolution, LTE) system, or may be applied to a 5G system, for example, an NR system, or may be applied to a next generation mobile communication system or another similar communication system, for example, a 6th generation mobile communication technology (6th generation, 6G) system. This is not specifically limited. The technical solutions provided in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario, for example, may be applied to an internet of vehicles, for example, V2X, or may be applied to intelligent driving, assisted driving, intelligent connected vehicles, or other fields.

An SL MAC CE may be used to transmit a plurality of different types of information. The following uses examples for description.
(1) The SL MAC CE includes an SL channel state information (channel state information, CSI) report (report).

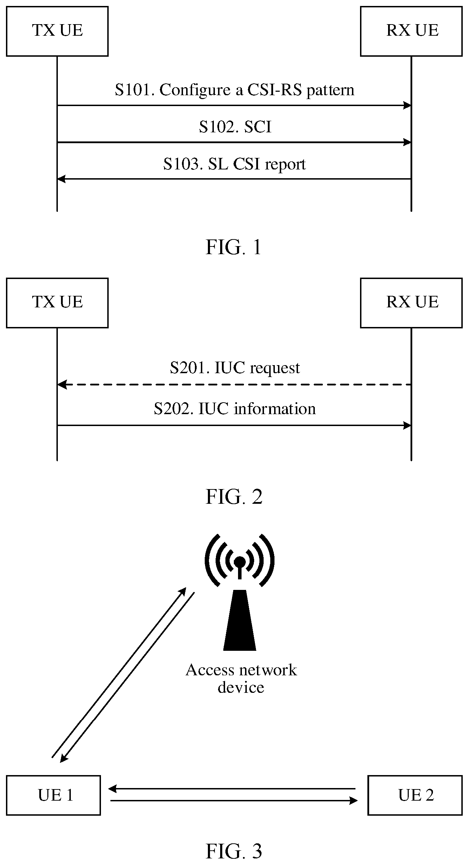

Currently, SL CSI reporting is specific only to unicast communication. FIG. 1 shows a sending process of an SL CSI report.

S101. A transmission UE (transmission UE, TX UE) sends a PC5-radio resource control (radio resource control, RRC) message to a reception UE (reception UE, RX UE). Correspondingly, the RX UE receives the PC5-RRC message from the TX UE.

The PC5-RRC message may be used to configure a CSI reference signal pattern (reference signal pattern, RS pattern).

S102. The TX UE sends sidelink control information (sidelink control information, SCI) to the RX UE. Correspondingly, the RX UE receives the SCI from the TX UE. For example, the TX UE may set a value of a CSI request (request) field (field) included in the SCI to "1", so that the SCI is used to trigger SL CSI reporting.

In addition, the TX UE may further send a reference signal to the RX UE based on the RS pattern configured in S101. For example, the reference signal is sent by using a physical sidelink shared channel (physical sidelink shared channel, PSSCH). The RX UE may measure the reference signal based on the RS pattern, to obtain an SL CSI report.

After receiving the SCI, the RX UE may trigger SL CSI reporting. For example, the RX UE maintains an SL CSI reporting status bit, and after receiving the SCI, the RX UE may set the status bit to a triggered state. After the SL CSI reporting is triggered, the RX UE may send the SL CSI report to the TX UE.

S103. The RX UE sends an SL CSI reporting MAC CE to the TX UE. Correspondingly, the TX UE receives the SL CSI reporting MAC CE from the RX UE. The SL CSI reporting MAC CE may include the SL CSI report obtained by the RX UE through measurement. For example, the SL CSI report includes information such as a rank indicator (rank indicator, RI) and a channel quality indicator (channel quality indicator, CQI).

A MAC layer of each of the TX UE and the RX UE may maintain a sidelink CSI report timer (sl-CSI-ReportTimer) for each unicast connection (a pair of a source layer 2 identifier (source L2 ID) and a destination layer 2 identifier (destination L2 ID)). sl-CSI-ReportTimer is used for a UE (for example, the RX UE in FIG. 1) that sends an SL CSI report to meet a latency requirement specified by a UE (for example, the TX UE in FIG. 1) that triggers SL CSI reporting. For example, the TX UE may configure sl-CSI-ReportTimer for the RX UE by using a PC5-RRC message. This PC5-RRC message and the PC5-RRC message in S101 may be a same message, or may be two messages. To be specific, the RX UE needs to send the SL CSI reporting MAC CE to the TX UE during running of sl-CSI-ReportTimer. Otherwise, the SL CSI report included in the SL CSI reporting MAC CE is invalid.

If the SL CSI reporting of the RX UE is triggered by the SCI and is not canceled, if sl-CSI-ReportTimer corresponding to the triggered SL CSI reporting is not running, sl-CSI-ReportTimer may be started. If sl-CSI-ReportTimer corresponding to the triggered SL CSI reporting expires, the SL CSI reporting may be canceled. For example, a status bit corresponding to the SL CSI reporting is set to a trigger cancelled state. Alternatively, if sl-CSI-ReportTimer is in a running state, and the MAC layer of the RX UE has an SL resource used for an initial transmission to transmit the SL CSI reporting MAC CE and a subheader (subheader) of the SL CSI reporting MAC CE, the RX UE may indicate to generate an SL CSI reporting MAC CE in a multiplexing and assembly process, and the RX UE may stop running sl-CSI-ReportTimer, and may cancel the triggered SL CSI reporting, for example, set the state bit corresponding to the SL CSI reporting to the trigger cancelled state.

(2) The SL MAC CE includes IUC information or an IUC request.

Currently, an IUC mechanism is introduced to enhance SL resource allocation. Refer to FIG. 2. In S202, a UE 1 may send IUC information to a UE 2. For example, the UE 1 sends the IUC information to the UE 2 by using an IUC information MAC CE. Correspondingly, the UE 2 may receive the IUC information MAC CE to obtain the IUC information. The IUC information may be used by the UE 2 to select an SL resource. For example, the IUC information may include a preferred (or recommended) resource set (preferred resource set) or a non-preferred (or non-recommended) resource set (non-preferred resource set). The preferred resource set may include information about an SL resource recommended to be selected by the UE 2. The non-preferred resource set may include information about an SL resource that is not recommended to be selected by the UE 2.

Optionally, before S202, S201 may be further included: The UE 2 may send an IUC request to the UE 1. The IUC request is, for example, included in an IUC request MAC CE, and the IUC request may be used to request the IUC information, for example, request the UE 1 to send the IUC information to the UE 2. After receiving the IUC request MAC CE, the UE 1 may send the IUC information to the UE 2, for example, send the IUC information MAC CE including the IUC information to the UE 2.

Currently, for the IUC information triggered by the request of the UE 2 (for example, the UE 1 sends the IUC information MAC CE to the UE 2 after receiving the IUC request MAC CE from the UE 2), the UE 1 may send the IUC information by using a transmission resource pool 1 corresponding to a transmission resource pool 2 used to transmit the IUC request of the UE 2. It may be understood that, if the UE 2 sends the IUC request (for example, sends the IUC request MAC CE) to the UE 1 by using an SL resource included in the transmission resource pool 2, the UE 1 may send the IUC information (for example, sends the IUC information MAC CE) to the UE 2 by using an SL resource included in the transmission resource pool 1. An SL resource indicated by the IUC information may be an SL resource in the transmission resource pool 1. The transmission resource pool 1 is a resource pool configured for the UE 1 to use, and the transmission resource pool 2 is a resource pool configured for the UE 2 to use. The two resource pools correspond to each other. For example, the two resource pools may be a same resource pool, or may be different resource pools. Alternatively, for IUC information triggered based on a condition, that is, the UE 2 does not send an IUC request to the UE 1, but the UE 1 sends the IUC information to the UE 2 as triggered by another condition, the UE 1 may send the IUC information to the UE 2 by using an SL resource included in a resource pool associated with the IUC information (for example, including a resource pool in which the SL resource indicated by the IUC information is located). The SL resource indicated by the IUC information may also be an SL resource in the resource pool. In addition, one carrier may include one or more resource pools.

Currently, in SL communication, one UE may send an SL MAC CE to another UE. Information included in some legacy SL MAC CEs is specific to a carrier, because currently, only single-carrier communication is supported in an SL scenario. When multi-carrier communication is considered in the SL scenario, if a current manner is still used, after receiving an SL MAC CE, a reception end UE cannot determine a carrier to which information included in the SL MAC CE is specific, which affects function implementation of the SL MAC CE. Consequently, an information indication error may be caused, and SL communication quality may be reduced.

In view of this, the technical solutions in embodiments of this application are provided. In embodiments of this application, a first UE may determine at least one sidelink control element based on carrier information, so that the at least one sidelink control element can participate in an SL LCP process. This is equivalent to that in embodiments of this application, a part of sidelink control elements are selected from a to-be-sent sidelink control element based on the carrier information, and the selected at least one sidelink control element may participate in the SL LCP process, for example, participate in determining a first destination address, while an unselected sidelink control element may not participate in determining the first destination address. Therefore, a first sidelink control element determined based on the first destination address probably belongs to the at least one sidelink control element, or in other words, is determined based on the carrier information. If the first sidelink control element is also determined based on the carrier information, after receiving the first sidelink control element, a reception end can determine a carrier corresponding to information included in the first sidelink control element, thereby reducing a probability of an indication error and improving sidelink communication quality.

In embodiments of this application, the sidelink control element is, for example, an SL MAC CE, or may be other sidelink transmission information. An example in which the sidelink control element is an SL MAC CE is used for description below.

In embodiments of this application, the SL may be referred to as a "sidelink" for short. For example, an SL CSI report may be referred to as a sidelink CSI report for short, an SL MAC CE may be referred to as a sidelink MAC CE for short, and an SL LCP may be referred to as a sidelink LCP for short. This is used as an example below. Alternatively, the SL may also be referred to as a "sidelink". For example, an SL CSI report may also be referred to as a sidelink CSI report, an SL MAC CE may also be referred to as a sidelink MAC CE, and an SL LCP may also be referred to as a sidelink LCP.

FIG. 3 shows a communication network architecture to which an embodiment of this application is applicable. A UE 1 and a UE 2 perform SL communication with each other. For example, the UE 1 may send data to the UE 2. For example, the data is an SL MAC CE. The UE 1 may be in an in-coverage (in-coverage, IC) state or an out-of-coverage (out-of-coverage, OOC) state. When the UE 1 is in an RRC connected (connected) state, the UE 1 may request an SL resource from an access network device (an access network device shown in FIG. 3) to send SL information, for example, send an SL MAC CE or SL data. This mode is referred to as a resource allocation mode of a mode 1 (mode 1). In the mode 1, the access network device may schedule an SL resource for the UE 1 by using downlink control information (downlink control information, DCI), or configure an SL configured grant (configured grant) for the UE 1 by using an RRC message.

Alternatively, the UE 1 may work in a mode 2 (mode 2). When the UE 1 works in the mode 2, the UE 1 may be in the RRC connected state, an RRC inactive (inactive) state, an RRC idle (idle) state, the OOC state, or the like. In the mode 2, the UE 1 may receive information about an SL resource pool from the access network device, or determine the SL resource pool based on preconfigured information, to select an SL resource from the SL resource pool to send SL information, for example, send an SL MAC CE or SL data. The UE 1 may randomly select an SL resource from the SL resource pool, or may select an SL resource based on a result of sensing (sensing) or partial sensing (partial sensing).

To better describe embodiments of this application, the following describes, with reference to accompanying drawings, methods provided in embodiments of this application. In embodiments of this application, an SL MAC CE may indicate to-be-sent information. For example, in an indication manner, the SL MAC CE includes the to-be-sent information. For another example, in another indication manner, the SL MAC CE includes indication information, the indication information can indicate the to-be-sent information, and a reception end can determine the to-be-sent information based on the indication information. The to-be-sent information includes, for example, one or more of an SL CSI report, IUC information, or an IUC request, and may further include other sidelink information. For ease of description, an example in which an SL MAC CE includes to-be-sent information is used below. It may be understood that the following descriptions that an SL MAC CE includes corresponding information may be replaced with that the SL MAC CE indicates the information. In addition, an LCH may also indicate to-be-sent information, and an indication manner is similar to the indication manner of the SL MAC CE. For ease of description, an example in which an LCH includes to-be-sent information is used below. It may be understood that the following descriptions that an LCH includes corresponding information may be replaced with that the LCH indicates the information.

Unless otherwise specified below, in accompanying drawings corresponding to embodiments of this application, steps represented by dashed lines are all optional steps. The methods provided in embodiments of this application may be applied to the network architecture shown in FIG. 3. For example, a first UE in the methods provided in embodiments of this application may be the UE 1 in FIG. 3, a second UE in the methods provided in embodiments of this application may be the UE 2 in FIG. 3, and an access network device in the methods provided in embodiments of this application may be the access network device in FIG. 3.

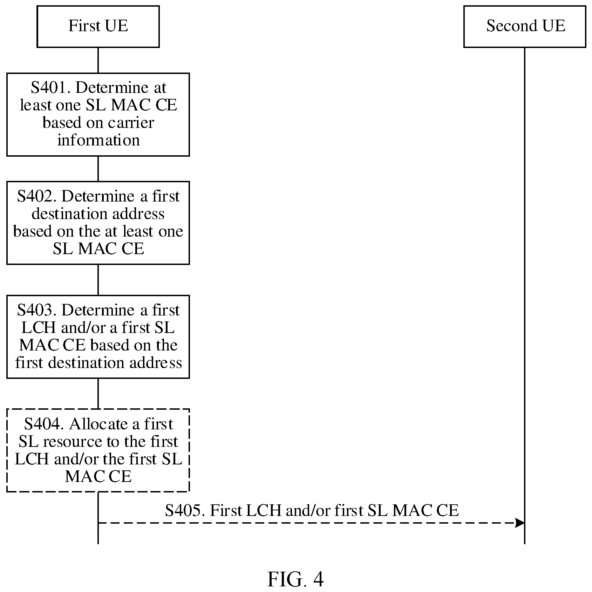

First, a first communication method provided in an embodiment of this application is described. FIG. 4 is a flowchart of the method.

S401. A first UE determines at least one sidelink control element based on carrier information. One or more of the at least one sidelink control element are, for example, SL MAC CEs. For example, each of the at least one sidelink control element is an SL MAC CE. An example in which each of the at least one sidelink control element is an SL MAC CE is used below. Therefore, the at least one sidelink control element is described as at least one SL MAC CE below.

Before performing an initial SL transmission, the first UE may perform an SL LCP process. For example, the first UE has a to-be-sent LCH and/or SL MAC CE, and the first UE has determined an SL resource (for example, referred to as a first SL resource) used for the current transmission. In this case, the first UE may determine, through the SL LCP process, to-be-sent LCHs and/or SL MAC CEs to which the first SL resource is allocated. If the first UE works in a mode 1, the first SL resource may be an SL resource requested by the first UE from an access network device. If the first UE works in a mode 2, the first SL resource may be an SL resource selected by the first UE from an SL resource pool. There may be one or more to-be-sent LCHs. The to-be-sent LCH may also be understood as an LCH associated with a destination (destination) address of to-be-sent information, and the LCH includes the to-be-sent information. There may be one or more to-be-sent SL MAC CEs. The to-be-sent SL MAC CE may also be understood as an SL MAC CE associated with a destination address of to-be-sent information, and the SL MAC CE includes the to-be-sent information. The to-be-sent information included in the LCH is the same as or different from the to-be-sent information included in the SL MAC CE.

In this embodiment of this application, the at least one SL MAC CE is, for example, determined from the to-be-sent SL MAC CE based on the carrier information, and the at least one SL MAC CE may include a part of or all to-be-sent SL MAC CEs. The carrier information may include information about a carrier corresponding to the at least one SL MAC CE, or the carrier information may include information about a carrier corresponding to the to-be-sent SL MAC CE. For example, in a manner of determining the at least one SL MAC CE based on the carrier information, the at least one SL MAC CE is determined based on the carrier information and the first SL resource. A carrier corresponding to the at least one SL MAC CE determined in this manner may have a corresponding relationship with the first SL resource. For example, a reception end UE (for example, a second UE) can determine, based on a carrier on which the first SL resource is located, the carrier corresponding to the at least one SL MAC CE. If the technical solution in this embodiment of this application is not applied, in an SL scenario of multi-carrier communication, the reception end UE may not be capable of determining the carrier corresponding to the SL MAC CE, resulting in a carrier determining error. For example, the reception end UE may determine that an SL MAC CE originally corresponding to a carrier 1 corresponds to a carrier 2, and then a processing mechanism originally applied to the carrier 1 may be incorrectly applied to the carrier 2, which may cause communication quality deterioration, or even a transmission failure. After the technical solution in this embodiment of this application is applied, even in the SL scenario of multi-carrier communication, the reception end UE can still determine, based on the carrier on which the first SL resource is located, the carrier corresponding to the SL MAC CE, thereby reducing a carrier indication error probability of the SL MAC CE, and improving sidelink communication quality.

Optionally, the determining the at least one SL MAC CE based on the carrier information and the first SL resource includes, for example, determining that the carrier on which the first SL resource is located includes the carrier corresponding to the at least one SL MAC CE, and/or determining that the carrier corresponding to the at least one SL MAC CE and the carrier on which the first SL resource is located are a same carrier. For example, in the to-be-sent SL MAC CE, if a carrier corresponding to an SL MAC CE is included in the carrier on which the first SL resource is located, and/or the carrier corresponding to the SL MAC CE and the carrier on which the first SL resource is located are a same carrier, the SL MAC CE may be one of the at least one SL MAC CE. Alternatively, in the to-be-sent SL MAC CE, if a carrier corresponding to an SL MAC CE is not included in the carrier on which the first SL resource is located, and the carrier corresponding to the SL MAC CE and the carrier on which the first SL resource is located are different carriers, the SL MAC CE may not be included in the at least one SL MAC CE. For example, the first UE sends one of the at least one SL MAC CE to the second UE. After receiving the SL MAC CE, the second UE can determine that the carrier on which the first SL resource is located includes a carrier corresponding to the SL MAC CE, or determine that the carrier on which the first SL resource is located and the carrier corresponding to the SL MAC CE are a same carrier. The second UE receives the SL MAC CE by using the first SL resource. Therefore, the second UE can determine the carrier on which the first SL resource is located, and the second UE can determine the carrier corresponding to the SL MAC CE, or determine a carrier corresponding to information included in the SL MAC CE.

The SL MAC CE may include to-be-sent information. The to-be-sent information is, for example, an SL CSI report, IUC information, or an IUC request, or may be other information. This is not specifically limited. The carrier corresponding to the SL MAC CE may vary with different information included in the SL MAC CE. The following uses a second SL MAC CE as an example for description. The second SL MAC CE is, for example, any one of the to-be-sent SL MAC CEs or any one of the at least one SL MAC CE.

In an optional implementation, if the second SL MAC CE includes an SL CSI report, or in other words, to-be-sent information included in the second SL MAC CE is an SL CSI report, a carrier corresponding to the second SL MAC CE is, for example, a carrier used to transmit SCI, a carrier on which SL transmission scheduled (or indicated) by the SCI is located, or a carrier on which an SL resource scheduled (or indicated) by the SCI is located. The SL resource scheduled (or indicated) by the SCI is, for example, an SL resource used to transmit an SL CSI report. The carrier on which SL transmission scheduled by the SCI is located is a carrier on which the second SL MAC CE is located. The SL transmission scheduled by the SCI is, for example, an SL CSI report or other SL information. Optionally, an SL MAC CE including an SL CSI report is, for example, an SL CSI reporting MAC CE. The SCI is, for example, from the second UE, and the SCI may indicate the first UE to send the SL CSI report. For example, if a value of a CSI request field included in the SCI is "1", it indicates that the SCI is used to trigger SL CSI reporting.

For example, in a case of same-carrier scheduling, a carrier for transmitting the SCI is a carrier for transmitting the second SL MAC CE. Therefore, in the case of same-carrier scheduling, the carrier corresponding to the second SL MAC CE may be the carrier used to transmit the SCI, or the carrier on which SL transmission scheduled (or indicated) by the SCI is located, or the carrier on which the SL resource scheduled (or indicated) by the SCI is located.

For another example, in a case of cross-carrier scheduling, the carrier for transmitting the SCI may or may not be the carrier for transmitting the second SL MAC CE. Therefore, in the case of cross-carrier scheduling, the carrier corresponding to the second SL MAC CE may be the carrier on which SL transmission scheduled (or indicated) by the SCI is located, or the carrier on which the SL resource scheduled (or indicated) by the SCI is located.

In another optional implementation, if the second SL MAC CE includes IUC information, or in other words, the to-be-sent information included in the second SL MAC CE is IUC information, the carrier corresponding to the second SL MAC CE is, for example, a carrier on which a resource pool associated with the IUC information is located, or a carrier on which a resource pool in which an SL resource indicated by the IUC information is located is located, or a carrier used to transmit the IUC information. For example, if the first UE sends the IUC information to the second UE based on an IUC request from the second UE, the resource pool associated with the IUC information is, for example, a resource pool A configured for the first UE. The resource pool A and a resource pool B configured for the second UE may be a same resource pool, or may be different resource pools. The second UE sends the IUC request by using an SL resource in the resource pool B. In this case, the resource pool in which the SL resource indicated by the IUC information is located and the resource pool A may be a same resource pool. Therefore, the carrier on which the resource pool associated with the IUC information is located and the carrier on which the resource pool in which the SL resource indicated by the IUC information is located is located may be a same carrier. The SL resource used to transmit the IUC information may also be a resource in the resource pool A. Therefore, the carrier used to transmit the IUC information and a carrier on which the transmission resource pool is located may also be a same carrier. For another example, the second UE does not send an IUC request to the first UE, but the first UE sends the IUC information to the second UE as triggered by another condition. In this case, the resource pool associated with the IUC information is, for example, preconfigured, or predefined in a protocol, and is referred to as, for example, a resource pool C. In this case, the resource pool in which the SL resource indicated by the IUC information is located and the resource pool C may be a same resource pool. The SL resource used to transmit the IUC information may also be a resource in the resource pool C. Therefore, the carrier used to transmit the IUC information and a carrier on which the resource pool C is located may also be a same carrier.

In still another optional implementation, if the second SL MAC CE includes an IUC request, or in other words, the to-be-sent information included in the second SL MAC CE is an IUC request, the carrier corresponding to the second SL MAC CE is, for example, a carrier on which a resource pool associated with the IUC request is located, or a carrier on which a resource pool in which an SL resource indicated by the IUC request is located is located, or a carrier used to transmit the IUC request. For example, the first UE may send the IUC request to another UE (for example, the second UE), to request to obtain IUC information. The resource pool associated with the IUC request is, for example, a transmission resource pool in which an SL resource used to send the IUC request is located, and is referred to as, for example, a resource pool D. In addition to requesting to obtain the IUC information, the IUC request may further indicate a corresponding SL resource. The SL resource indicated by the IUC request is, for example, also included in the resource pool D. Therefore, the carrier on which the resource pool associated with the IUC request is located and the carrier on which the resource pool in which the SL resource indicated by the IUC request is located is located may be a same carrier. In addition, the SL resource used to transmit the IUC request may also be an SL resource in the resource pool D. Therefore, the carrier on which the resource pool associated with the IUC request is located and the carrier used to transmit the IUC request may also be a same carrier.

In another possibility, the first UE cannot determine the at least one SL MAC CE based on the carrier information. For example, if the carrier on which the first SL resource is located does not include a carrier corresponding to any to-be-sent SL MAC CE, and the carrier corresponding to the to-be-sent SL MAC CE and the carrier on which the first SL resource is located are not a same carrier, the first UE cannot determine the at least one SL MAC CE. In this case, optionally, the first UE may perform carrier reselection or carrier selection to re-determine a carrier. After re-determining the carrier, the first UE may obtain an SL resource on the carrier, referred to as, for example, a second SL resource. The second SL resource may be a resource used for the current sidelink transmission. The first UE may re-perform S401 based on the second SL resource. For example, the first UE may determine one or more SL MAC CEs based on carrier information. In this case, the carrier information may include information about a carrier corresponding to the one or more SL MAC CEs, or include the information about the carrier corresponding to the to-be-sent SL MAC CE. For example, in a determining manner, the first UE determines the one or more SL MAC CEs based on the carrier information and the second SL resource. For this process, refer to the foregoing descriptions.

Optionally, the carrier re-determined by the first UE may include all or a part of carriers corresponding to the to-be-sent SL MAC CE. For example, the carrier re-determined by the first UE may include the carrier corresponding to the at least one SL MAC CE. In this way, the first UE can determine an SL MAC CE based on the carrier information and the second SL resource, so that the method in this embodiment of this application can be performed.

In an optional implementation, the carrier reselection or carrier selection process may be completed in first duration. The first duration is, for example, duration corresponding to a first timer (or a first timer), and the first timer may indicate a validity period of an SL MAC CE. For example, if the first UE sends the SL MAC CE within the duration corresponding to the first timer, the SL MAC CE is valid, or in other words, content included in the SL MAC CE is valid. Alternatively, if the first UE does not send the SL MAC CE within the duration corresponding to the first timer, the SL MAC CE is invalid, or in other words, the content included in the SL MAC CE is invalid. For example, if the SL MAC CE is an SL CSI reporting MAC CE, timing duration of the first timer is, for example, equal to timing duration of a timer corresponding to the SL CSI reporting MAC CE. For example, the first timer is the timer corresponding to the SL CSI reporting MAC CE, or may be another timer. For example, if the second UE sends SCI to the first UE to trigger SL CSI reporting, after receiving the SCI, the first UE may start a first timer corresponding to the SL CSI reporting.

That is, the carrier reselection or carrier selection process may be completed within a validity period of an SL MAC CE, to reduce an information transmission latency. Optionally, if the first UE cannot complete the carrier reselection or carrier selection process within the first duration, the first UE may send indication information to the destination address of the to-be-sent information (for example, an address of the second UE is the destination address of the to-be-sent information). The indication information may indicate that the first UE cannot send an SL MAC CE within the first duration. After receiving the indication information, the second UE may prolong a validity period of the SL MAC CE.

In another optional implementation, the carrier reselection or carrier selection process may be completed in second duration. The second duration is, for example, duration corresponding to a second timer (or a second timer), and duration corresponding to the second timer is greater than the duration corresponding to the first timer. For descriptions of the first timer, refer to the foregoing descriptions. The second timer is, for example, a timer provided in this embodiment of this application. Considering that the carrier reselection or carrier selection process may require a long time, if the first timer is used for timing, the first UE probably cannot complete carrier reselection or carrier selection within the duration corresponding to the first timer. Therefore, the first UE may maintain the second timer (the second UE may also maintain the second timer), so that the first UE has as much time as possible to perform carrier reselection or carrier selection, thereby reducing a probability that an SL MAC CE is invalid.

S402. The first UE determines a first destination address based on the at least one SL MAC CE. For example, the first destination address is a destination L2 ID or a destination.

S402 may be considered as the first step included in the SL LCP process. S401 may be performed before the SL LCP process. It may be understood that, the at least one SL MAC CE is selected from the to-be-sent SL MAC CE based on the carrier information, and the at least one SL MAC CE can participate in the SL LCP process starting from S402, while an unselected SL MAC CE may not participate in the SL LCP process. Alternatively, S402 and S401 may be considered as a same step. For example, in this step, the first UE may determine the at least one SL MAC CE based on the carrier information, and then determine the first destination address based on the at least one SL MAC CE. This is equivalent to improving the first step of the existing SL LCP process.

It may be understood that in this embodiment of this application, the at least one SL MAC CE is selected from the to-be-sent SL MAC CE based on the carrier information, and the selected at least one SL MAC CE may continue to participate in the SL LCP process, for example, participate in determining the first destination address, while an unselected SL MAC CE may not participate in determining the first destination address. Therefore, a quantity of SL MAC CEs participating in determining the first destination address is reduced, and a process of determining the first destination address is simplified.

For example, in a manner in which the first UE determines the first destination address based on the at least one SL MAC CE, the first UE determines the first destination address based on a priority of the at least one SL MAC CE. For example, the first UE may determine a destination address associated with an SL MAC CE with a highest priority in the at least one SL MAC CE as the first destination address.

Alternatively, in addition to the to-be-sent SL MAC CE, there may be a to-be-sent LCH. Therefore, for example, in another manner in which the first UE determines the first destination address based on the at least one SL MAC CE, the first UE determines the first destination address based on the priority of the at least one SL MAC CE and a priority of the to-be-sent LCH. For example, the first UE may determine a destination address associated with an SL MAC CE and/or LCH with a highest priority in the at least one SL MAC CE and the to-be-sent LCH as the first destination address. There may be one or more to-be-sent LCHs. A destination address associated with an SL MAC CE is, for example, an address of a reception end configured to receive the SL MAC CE, and an understanding of a destination address associated with an LCH is similar thereto. Optionally, the first UE may determine, from the at least one SL MAC CE, an SL MAC CE with a highest priority and meeting a first condition, and/or determine, from the to-be-sent LCH, an LCH with a highest priority and meeting a first condition. The first UE may determine a destination address associated with the selected SL MAC CE and/or LCH as the first destination address. Alternatively, the first UE may determine an SL MAC CE with a highest priority from the at least one SL MAC CE, and/or determine, from the to-be-sent LCH, an LCH with a highest priority and meeting a first condition. The first UE may determine a destination address associated with the selected SL MAC CE and/or LCH as the first destination address. That is, the first UE may or may not select an SL MAC CE based on the first condition (or in other words, the SL MAC CE does not necessarily meet the first condition).

For example, the first condition includes: having valid SL transmission information, and/or being allowed to use a first SL resource (or a second SL resource) corresponding to a corresponding SL configured grant (configured grant, CG) type (type) 1. That an LCH has valid SL transmission information means that the LCH is not empty or the LCH has to-be-transmitted information. That an SL MAC CE has valid SL transmission information means that the SL MAC CE is not empty or the SL MAC CE has to-be-transmitted information. In addition, if the first SL resource (or the second SL resource) is of the CG type 1, the first SL resource (or the second SL resource) can be used for transmission only when the LCH is configured to being allowed to use the CG type 1. Otherwise, the first SL resource (or the second SL resource) cannot be used for transmission.

The first condition met by the LCH may be the same as or different from the first condition met by the SL MAC CE. Optionally, the first condition met by the SL MAC CE may include a part of conditions included in the first condition described above. For example, the first condition met by the SL MAC CE may include the condition of having valid SL transmission information, but does not include the condition of being allowed to use the first SL resource (or the second SL resource) corresponding to the corresponding SL CG type 1. Alternatively, the first condition met by the SL MAC CE may include the condition of being allowed to use the first SL resource (or the second SL resource) corresponding to the corresponding SL CG type 1, but does not include the condition of having valid SL transmission information.

S403. The first UE determines a first LCH and/or a first SL MAC CE based on the first destination address.

S403 may be considered as the second step included in the SL LCP process. In S402, the first UE determines the first destination address. The first destination address may be associated with one or more LCHs and/or one or more SL MAC CEs. In this case, in S403, the first UE may determine the first LCH from the LCH associated with the first destination address, and/or determine the first SL MAC CE from the SL MAC CE associated with the first destination address. A quantity of LCHs included in the first LCH may be greater than or equal to 1, and a quantity of SL MAC CEs included in the first SL MAC CE may be greater than or equal to 1.

For example, the first UE may determine, from the LCH associated with the first destination address, an LCH that meets a second condition, and/or determine, from the SL MAC CE associated with the first destination address, an SL MAC CE that meets a second condition. Alternatively, the first UE may determine, from the LCH associated with the first destination address, an LCH that meets a second condition, and/or determine the SL MAC CE associated with the first destination address. That is, the first UE may or may not select an SL MAC CE based on the second condition (or in other words, the SL MAC CE does not necessarily meet the second condition). The second condition includes, for example, one or more of the following: having valid SL transmission information, being allowed to use an SL CG type corresponding to the first SL resource (or the second SL resource), having an attribute the same as a hybrid automatic repeat request (hybrid automatic repeat request, HARQ) feedback (feedback) enabled (enabled)/disabled (disabled) attribute corresponding to an LCH that is associated with the first destination address and that has a highest priority or that has a highest priority and meets the first condition, or having an attribute the same as a HARQ feedback enabled/disabled attribute corresponding to an SL MAC CE that is associated with the first destination address and that has a highest priority or that has a highest priority and meets the first condition. If the LCH with the highest priority in the LCH associated with the first destination address is enabled, only an enabled LCH or SL MAC CE can be selected in S403. Alternatively, if the LCH with the highest priority in the LCH associated with the first destination address is disabled, only a disabled LCH or SL MAC CE can be selected in S403.

The second condition met by the LCH may be the same as or different from the second condition met by the SL MAC CE. Optionally, the second condition met by the SL MAC CE may include a part of conditions included in the second condition described above. For example, the second condition met by the SL MAC CE may include the condition of having valid SL transmission information and the condition of being allowed to use the SL CG type corresponding to the first SL resource (or the second SL resource), but does not include the condition of having an attribute the same as the HARQ feedback enabled/disabled attribute corresponding to the SL MAC CE that is associated with the first destination address and that has the highest priority or that has the highest priority and meets the first condition. Alternatively, the second condition met by the SL MAC CE may include the condition of having an attribute the same as the HARQ feedback enabled/disabled attribute corresponding to the SL MAC CE that is associated with the first destination address and that has the highest priority or that has the highest priority and meets the first condition, and the condition of having valid SL transmission information, but does not include the condition of being allowed to use the SL CG type corresponding to the first SL resource (or the second SL resource).

Optionally, the first SL MAC CE may belong to the at least one SL MAC CE in S401, or it is understood that the first SL MAC CE may be determined based on the carrier information. For example, the first UE may determine, from the SL MAC CE associated with the first destination address, an SL MAC CE that meets the second condition, and then determine, based on the carrier information, the first SL MAC CE from the SL MAC CE that meets the second condition. Alternatively, the first UE determines, based on the carrier information, M SL MAC CEs from the SL MAC CE associated with the first destination address, and then determines, from the M SL MAC CEs, a first SL MAC CE that meets the second condition. M is a positive integer. Alternatively, the first UE may determine, based on the carrier information, the first SL MAC CE from the SL MAC CE associated with the first destination address. For a manner in which the first UE determines the SL MAC CE based on the carrier information, refer to the foregoing descriptions.

It may be understood that the carrier information may also be used in the second step in the SL LCP process, so that the first SL MAC CE determined in the SL LCP process is determined based on the carrier information. For example, the first UE sends the first SL MAC CE to the second UE. After receiving the first SL MAC CE, the second UE can determine that the carrier on which the first SL resource (or the second SL resource) is located includes a carrier corresponding to the first SL MAC CE, or determine that the carrier on which the first SL resource (or the second SL resource) is located and the carrier corresponding to the first SL MAC CE are a same carrier. The second UE receives the first SL MAC CE by using the first SL resource (or the second SL resource). Therefore, the second UE can determine the carrier on which the first SL resource (or the second SL resource) is located, and the second UE can determine the carrier corresponding to the first SL MAC CE, or determine a carrier corresponding to information included in the first SL MAC CE. In this way, even in a multi-carrier SL scenario, the reception end UE can still determine the carrier corresponding to the received SL MAC CE, thereby reducing a carrier indication error probability of the SL MAC CE, and improving sidelink communication quality.

Alternatively, the carrier information may not be used in the second step of the SL LCP process. In this case, the first SL MAC CE may or may not belong to the at least one SL MAC CE in S401. It may be understood that whether the first SL MAC CE belongs to the at least one SL MAC CE depends on whether the at least one SL MAC CE is associated with the first destination address, or whether the at least one SL MAC CE is associated with the first destination address and meets the second condition, and is unrelated to the carrier information.

Optionally, the method may further include S404 and S405.

S404. The first UE allocates the first SL resource (or the second SL resource) to the first LCH and/or the first SL MAC CE.

For example, the first UE may allocate the first SL resource (or the second SL resource) to the first LCH and/or the first SL MAC CE based on a priority of the first LCH and/or a priority of the first SL MAC CE. For example, the first UE may first allocate an SL resource to transmission information (for example, an LCH and/or an SL MAC CE) with a high priority, and then allocate an SL resource to transmission information with a low priority. For example, a descending order of priorities is as follows: a priority of information carried on a signaling control channel (signaling control channel, SCCH) > a priority of an SL CSI reporting MAC CE > a priority of a sidelink inter-UE coordination request MAC CE (sidelink inter-UE coordination request MAC CE) and a priority of sidelink inter-UE coordination information MAC CE (sidelink inter-UE coordination information MAC CE) > a priority of a sidelink discontinuous reception command MAC CE (SL DRX command MAC CE) > a priority of information carried on any sidelink traffic channel (sidelink traffic channel, STCH).

For example, if the first LCH carries STCH information, it can be learned from the foregoing priority order that the priority of the first SL MAC CE may be higher than the priority of the first LCH, and the first UE may preferentially allocate the first SL resource (or the second SL resource) to the first SL MAC CE. If there is a remaining resource in the first SL resource (or the second SL resource), the first UE allocates the remaining resource to the first LCH.

For another example, if the first LCH carries SCCH information, it can be learned from the foregoing priority order that the priority of the first SL MAC CE may be lower than the priority of the first LCH, and the first UE may preferentially allocate the first SL resource (or the second SL resource) to the first LCH. If there is a remaining resource in the first SL resource (or the second SL resource), the first UE allocates the remaining resource to the first SL MAC CE.

S405. The first UE sends the first LCH and/or the first SL MAC CE. Reception ends of the first LCH and the first SL MAC CE may be the same or different. For example, if the second UE is the reception end of the first LCH and/or the first SL MAC CE, the second UE may receive the first LCH and/or the first SL MAC CE from the first UE.

In this embodiment of this application, the first UE may determine the at least one SL MAC CE based on the carrier information, so that the at least one SL MAC CE can participate in the SL LCP process. This is equivalent to that in this embodiment of this application, a part of SL MAC CEs are selected from the to-be-sent SL MAC CE based on the carrier information, and the selected at least one SL MAC CE may participate in the SL LCP process, for example, participate in determining the first destination address, while an unselected SL MAC CE may not participate in determining the first destination address. Therefore, a quantity of SL MAC CEs participating in determining the first destination address is reduced, and a process of determining the first destination address is simplified. In addition, the first SL MAC CE may belong to the at least one SL MAC CE in S401. For example, the first UE sends the first SL MAC CE to the second UE, and after receiving the first SL MAC CE, the second UE can determine the carrier corresponding to the first SL MAC CE, or determine the carrier corresponding to the information included in the first SL MAC CE. In this way, even in a multi-carrier SL scenario, the reception end UE can still determine the carrier corresponding to the received SL MAC CE, thereby reducing a carrier indication error probability of the SL MAC CE, and improving sidelink communication quality.

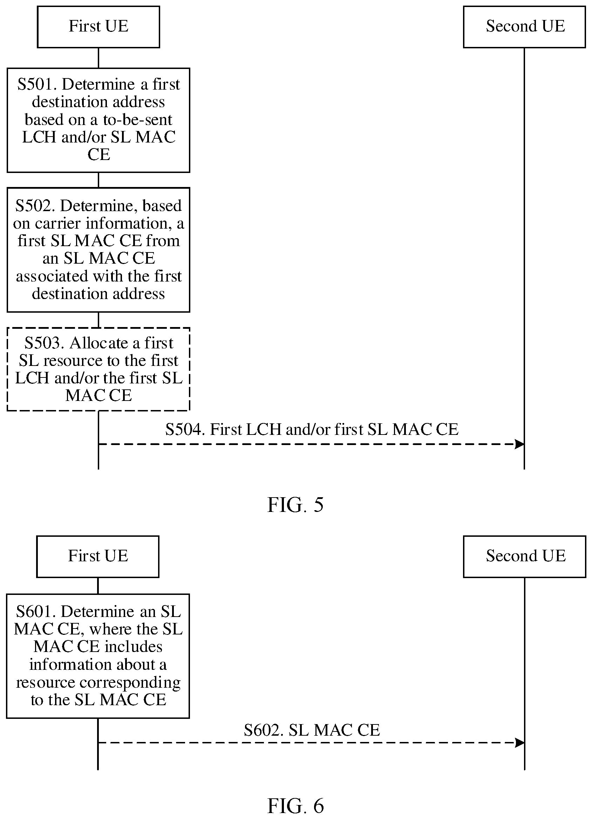

In the embodiment shown in FIG. 4, the first UE may determine the at least one SL MAC CE based on the carrier information before performing the SL LCP process, or may determine the at least one SL MAC CE based on the carrier information when performing the first step of SL LCP, or consider, in both the first step and the second step of SL LCP, the SL MAC CE determined based on the carrier information. In addition, an embodiment of this application provides a second communication method. In the method, the first UE may consider, in the second step of SL LCP, the SL MAC CE determined based on the carrier information, but not consider, in the first step of SL LCP, the SL MAC CE determined based on the carrier information. FIG. 5 is a flowchart of the method.

S501. A first UE determines a first destination address based on a to-be-sent LCH and/or SL MAC CE. For example, the first destination address is a destination L2 ID or a destination.

S501 may be considered as the first step included in an SL LCP process. For example, the first UE has a to-be-sent LCH and/or SL MAC CE, and the first UE has determined an SL resource (for example, referred to as a first SL resource) used for a current transmission. In this case, the first UE may determine, through the SL LCP process, to-be-sent LCHs and/or SL MAC CEs to which the first SL resource may be allocated. If the first UE works in a mode 1, the first SL resource may be an SL resource requested by the first UE from an access network device. If the first UE works in a mode 2, the first SL resource may be an SL resource selected by the first UE from an SL resource pool. There may be one or more to-be-sent LCHs. The to-be-sent LCH may also be understood as an LCH associated with a destination (destination) address of to-be-sent information, and the LCH includes the to-be-sent information. There may be one or more to-be-sent SL MAC CEs. The to-be-sent SL MAC CE may also be understood as an SL MAC CE associated with a destination address of to-be-sent information, and the SL MAC CE includes the to-be-sent information. The to-be-sent information included in the LCH is the same as or different from the to-be-sent information included in the SL MAC CE.

For example, in a manner in which the first UE determines the first destination address based on the to-be-sent LCH and/or SL MAC CE, the first UE determines the first destination address based on a priority of the to-be-sent LCH and/or SL MAC CE. For example, the first UE may determine a destination address associated with an LCH and/or SL MAC CE with a highest priority in the to-be-sent LCH and/or SL MAC CE as the first destination address. There may be one or more to-be-sent LCHs. There may be one or more to-be-sent SL MAC CEs. A destination address associated with an SL MAC CE is, for example, an address of a reception end configured to receive the SL MAC CE, and an understanding of a destination address associated with an LCH is similar thereto.

Alternatively, in another manner in which the first UE determines the first destination address based on the to-be-sent LCH and/or SL MAC CE, the first UE may determine, from the to-be-sent SL MAC CE, an SL MAC CE with a highest priority and meeting a first condition, and/or determine, from the to-be-sent LCH, an LCH with a highest priority and meeting a first condition, and the first UE may determine a destination address associated with the selected SL MAC CE and/or LCH as the first destination address. Alternatively, the first UE may determine an SL MAC CE with a highest priority from the to-be-sent SL MAC CE, and/or determine, from the to-be-sent LCH, an LCH with a highest priority and meeting a first condition, and the first UE may determine a destination address associated with the selected SL MAC CE and/or LCH as the first destination address. For descriptions of the first condition, refer to S402 in the embodiment shown in FIG. 4.

S502. The first UE determines, based on carrier information, a first SL MAC CE from an SL MAC CE associated with the first destination address.

S502 may be considered as the second step included in the SL LCP process. In S501, the first UE determines the first destination address. The first destination address may be associated with one or more LCHs and/or one or more SL MAC CEs. In this case, in S502, the first UE may determine a first LCH from the LCH associated with the first destination address, and/or determine, based on carrier information, a first SL MAC CE from the SL MAC CE associated with the first destination address. A quantity of LCHs included in the first LCH may be greater than or equal to 1, and a quantity of SL MAC CEs included in the first SL MAC CE may be greater than or equal to 1.

The carrier information may include information about a carrier corresponding to the first SL MAC CE, or the carrier information may include information about carriers corresponding to all the SL MAC CEs associated with the first destination address. For example, in a manner in which the first UE determines, based on the carrier information, the first SL MAC CE from the SL MAC CE associated with the first destination address, the first UE determines, based on the carrier information and the first SL resource, the first SL MAC CE from the SL MAC CE associated with the first destination address. A carrier corresponding to the first SL MAC CE determined in this manner may have a corresponding relationship with the first SL resource. For example, a reception end UE (for example, a second UE) can determine, based on a carrier on which the first SL resource is located, the carrier corresponding to the first SL MAC CE. In this way, even in an SL scenario of multi-carrier communication, the reception end UE can determine, based on the carrier on which the first SL resource is located, the carrier corresponding to the SL MAC CE, thereby reducing a carrier indication error probability of the SL MAC CE, and improving sidelink communication quality.

Optionally, the determining, based on the carrier information and the first SL resource, the first SL MAC CE from the SL MAC CE associated with the first destination address includes, for example, determining that the carrier on which the first SL resource is located includes the carrier corresponding to the first SL MAC CE, and/or determining that the carrier corresponding to the first SL MAC CE and the carrier on which the first SL resource is located are a same carrier. For more descriptions of this part of content, for example, content such as the carrier corresponding to the first SL MAC CE, refer to S401 in the embodiment shown in FIG. 4.

For example, the first UE may determine, from the LCH associated with the first destination address, an LCH that meets a second condition, for example, the first LCH; and/or determine, from the SL MAC CE associated with the first destination address, at least one SL MAC CE that meets a second condition, and then determine, based on the carrier information and the first SL resource, the first SL MAC CE from the at least one SL MAC CE (or determine, based on the carrier information and the first SL resource, at least one SL MAC CE from the SL MAC CE associated with the first destination address, and then determine, from the at least one SL MAC CE, a first SL MAC CE that meets the second condition; or determine, based on the carrier information and the first SL resource, the first SL MAC CE from the SL MAC CE associated with the first destination address). For the second condition, refer to S403 in the embodiment shown in FIG. 4.

Optionally, the method may further include S503 and S504.

S503. Allocate the first SL resource to the first SL MAC CE and/or the first LCH.

For more content of S503, refer to S404 in the embodiment shown in FIG. 4.

S504. The first UE sends the first LCH and/or the first SL MAC CE. Reception ends of the first LCH and the first SL MAC CE may be the same or different. For example, if the second UE is a reception end of the first LCH and/or the first SL MAC CE, the second UE may receive the first LCH and/or the first SL MAC CE from the first UE.

In another possibility, the first UE cannot determine, based on the carrier information, an SL MAC CE from the SL MAC CE associated with the first destination address. For example, if the carrier on which the first SL resource is located does not include a carrier corresponding to any SL MAC CE associated with the first destination address, and the carrier corresponding to the SL MAC CE associated with the first destination address and the carrier on which the first SL resource is located are not a same carrier, the first UE cannot determine an SL MAC CE. In this case, optionally, the first UE may perform carrier reselection or carrier selection to re-determine a carrier. After re-determining the carrier, the first UE may obtain an SL resource on the carrier, referred to as, for example, a second SL resource. The second SL resource may be a resource used for the current sidelink transmission. The first UE may re-perform S501 to S504 based on the second SL resource.

Optionally, the carrier re-determined by the first UE may include all or a part of carriers corresponding to the SL MAC CE associated with the first destination address. For example, the carrier re-determined by the first UE may include the carrier corresponding to the first SL MAC CE. In this way, the first UE can determine the first SL MAC CE based on the carrier information and the second SL resource, so that the method in this embodiment of this application can be performed.

In an optional implementation, the carrier reselection or carrier selection process may be completed in first duration. For this, refer to S401 in the embodiment shown in FIG. 4. Optionally, if the first UE cannot complete the carrier reselection or carrier selection process within the first duration, the first UE may send indication information to the destination address of the to-be-sent information (for example, an address of the second UE is the destination address of the to-be-sent information). The indication information may indicate that the first UE cannot send an SL MAC CE within the first duration. After receiving the indication information, the second UE may prolong a validity period of the SL MAC CE.

In another optional implementation, the carrier reselection or carrier selection process may be completed in second duration. For this, refer to S402 in the embodiment shown in FIG. 4.

In this embodiment of this application, the first UE may determine the first SL MAC CE based on the carrier information in the second step of SL LCP. For example, the first UE sends the first SL MAC CE to the second UE, and after receiving the first SL MAC CE, the second UE can determine the carrier corresponding to the first SL MAC CE, or determine a carrier corresponding to information included in the first SL MAC CE. In this way, even in a multi-carrier SL scenario, the reception end UE can still determine the carrier corresponding to the received SL MAC CE, thereby reducing a carrier indication error probability of the SL MAC CE, and improving sidelink communication quality.

In the embodiment shown in FIG. 4 or the embodiment shown in FIG. 5, if the first UE sends an SL MAC CE on an SL carrier, it may indicate that the SL MAC CE corresponds to the SL carrier, or it indicates that content included in the SL MAC CE corresponds to the SL carrier. Therefore, an existing format, for example, referred to as a first format, may be used as a format of the SL MAC CE. The following describes a third communication method provided in an embodiment of this application. In the method, a format of an SL MAC CE may be changed, so that the SL MAC CE is applicable to a multi-carrier scenario. FIG. 6 is a flowchart of the method.

S601. A first UE determines an SL MAC CE.

The SL MAC CE may include first information. For example, a format of the SL MAC CE is a second format. In the second format, the SL MAC CE further includes information about a resource corresponding to the SL MAC CE. Optionally, the first UE may determine, based on carrier information, that the format of the SL MAC CE is the second format. The carrier information includes, for example, information about a carrier corresponding to the SL MAC CE, and/or includes a quantity of carriers used for communication between the first UE and a second UE. This part of content is described in another embodiment below.

The first information is, for example, to-be-sent information carried by the SL MAC CE. For example, the first information is an SL CSI report, IUC information, or an IUC request. The resource corresponding to the SL MAC CE is, for example, a carrier and/or a resource pool. The resource corresponding to the SL MAC CE may vary with different first information. The following uses examples for description.

In an optional implementation, the first information is an SL CSI report (optionally, in this case, the SL MAC CE is, for example, an SL CSI reporting MAC CE). In this case, the resource corresponding to the SL MAC CE may be a carrier. For example, the carrier corresponding to the SL MAC CE is a carrier used to transmit SCI, or a carrier on which SL transmission scheduled (or indicated) by the SCI is located, or a carrier on which an SL resource scheduled (or indicated) by the SCI is located. The SL resource scheduled (or indicated) by the SCI is, for example, an SL resource used to transmit an SL CSI report. The carrier on which SL transmission scheduled by the SCI is located is a carrier on which the SL MAC CE is located. The SCI is, for example, from the second UE, and the SCI may indicate the first UE to send the SL CSI report. For example, if a value of a CSI request field included in the SCI is "1", it indicates that the SCI is used to trigger SL CSI reporting. For more content of the SCI, refer to S401 in the embodiment shown in FIG. 4.

In another optional implementation, the first information is IUC information (optionally, in this case, the SL MAC CE is, for example, an IUC information MAC CE). In this case, the resource corresponding to the SL MAC CE may be a carrier. For example, the carrier corresponding to the SL MAC CE is a carrier on which a resource pool associated with the IUC information is located, or a carrier on which a resource pool in which an SL resource indicated by the IUC information is located is located, or a carrier used to transmit the IUC information. For more descriptions of this part of content, refer to S401 in the embodiment shown in FIG. 4.

Alternatively, if the first information is IUC information, the resource corresponding to the SL MAC CE may be a resource pool. For example, the resource pool corresponding to the SL MAC CE is a resource pool associated with the IUC information, or a resource pool in which an SL resource indicated by the IUC information is located, or a resource pool in which an SL resource used to transmit the IUC information is located. For more descriptions of this part of content, refer to S401 in the embodiment shown in FIG. 4.

In still another optional implementation, the first information is an IUC request (optionally, in this case, the SL MAC CE is, for example, an IUC request MAC CE). In this case, the resource corresponding to the SL MAC CE may be a carrier. For example, the carrier corresponding to the SL MAC CE is a carrier on which a resource pool associated with the IUC request is located, or a carrier on which a resource pool in which an SL resource indicated by the IUC request is located is located, or a carrier used to transmit the IUC request. For more descriptions of this part of content, refer to S401 in the embodiment shown in FIG. 4.

Alternatively, if the first information is an IUC request, the resource corresponding to the SL MAC CE may be a resource pool. For example, the resource pool corresponding to the SL MAC CE is a resource pool associated with the IUC request, a resource pool in which an SL resource indicated by the IUC request is located, or a resource pool in which an SL resource used to transmit the IUC request is located. For more descriptions of this part of content, refer to S401 in the embodiment shown in FIG. 4.

For example, in a manner in which the SL MAC CE includes the information about the resource corresponding to the SL MAC CE, the SL MAC CE includes an index of the resource corresponding to the SL MAC CE, for example, includes an index of the carrier corresponding to the SL MAC CE and/or an index of the resource pool corresponding to the SL MAC CE. For example, the index of the carrier and/or the index of the resource pool may be predefined in a protocol; or may be preconfigured by the access network device for the first UE, and then configured by the first UE for the second UE; or may be separately preconfigured by the access network device for the first UE and the second UE; or may be determined by the first UE and the second UE through negotiation. In this case, the SL MAC CE needs to include only the index of the carrier or the index of the resource pool, so that the second UE can determine the corresponding carrier or resource pool.

If the resource corresponding to the SL MAC CE is a carrier, the SL MAC CE may include information about the carrier corresponding to the SL MAC CE, but not include information about a resource pool included in the carrier.

Alternatively, if the resource corresponding to the SL MAC CE is a resource pool, the SL MAC CE may include information about the resource pool corresponding to the SL MAC CE but not include information about a carrier on which the resource pool is located, or the SL MAC CE may include the information about the resource pool corresponding to the SL MAC CE and the information about the carrier on which the resource pool is located. For example, if resource pools on different carriers are numbered sequentially, that is, a resource pool index uniquely corresponds to a resource pool on a carrier, the SL MAC CE may include the index of the resource pool but not include the index of the carrier on which the resource pool is located. Even in a plurality of carriers, the second UE can still uniquely determine the resource pool based on the index of the resource pool. For another example, if resource pools on different carriers are numbered separately, that is, a resource pool index may not uniquely correspond to a resource pool on a carrier, but two resource pools on different carriers may use a same index, the SL MAC CE may include the index of the resource pool and the index of the carrier on which the resource pool is located, so that the second UE can uniquely determine the resource pool based on the two indexes.

Alternatively, in another manner in which the SL MAC CE includes the information about the resource corresponding to the SL MAC CE, the SL MAC CE may include a bitmap (bitmap). A quantity of bits included in the bitmap is the same as a total quantity of resources used for communication between the first UE and the second UE, or is the same as a quantity of resources configured for the first UE. The resource is, for example, a carrier or a resource pool. The carrier is used as an example. The quantity of bits included in the bitmap may be the same as the quantity of carriers used for communication between the first UE and the second UE, or may be the same as a quantity of carriers configured for the first UE. The bits included in the bitmap may one-to-one correspond to the carriers configured for the first UE. For example, if a value of a bit in the bitmap is "1", it indicates that the SL MAC CE corresponds to a carrier corresponding to the bit. If a value of a bit is "0", it indicates that the SL MAC CE does not correspond to a carrier corresponding to the bit. If the bits included in the bitmap one-to-one correspond to a quantity of resource pools configured for the first UE, an implementation is similar thereto. If the bitmap indicates the resource pool corresponding to the SL MAC CE, resource pools on different carriers may be numbered sequentially.

Alternatively, the SL MAC CE may include, in another manner, the information about the resource corresponding to the SL MAC CE. This is not limited herein.

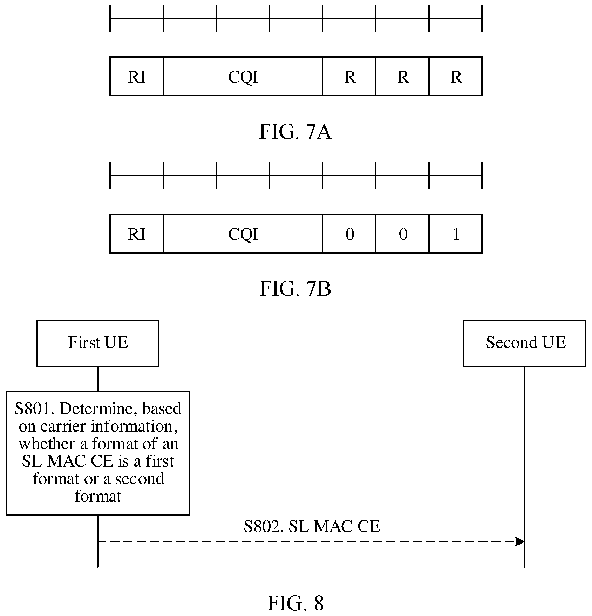

Optionally, N bits included in the SL MAC CE may be used to carry the information about the resource corresponding to the SL MAC CE. N is a positive integer. For example, an existing SL MAC CE includes 8 bits, where 3 bits are reserved (reserved, R) bits. For this, refer to FIG. 7A. In this case, N may be less than or equal to 3, which is equivalent to that a reserved bit in the SL MAC CE may be used to carry the information about the resource corresponding to the SL MAC CE. For example, the SL MAC CE includes the index of the resource corresponding to the SL MAC CE. FIG. 7B shows an example in which 3 reserved bits are used to carry the index of the resource corresponding to the SL MAC CE. In FIG. 7B, a value of the 3 reserved bits is "001". For example, the value indicates that the index of the carrier corresponding to the SL MAC CE is "1", indicating that the carrier corresponding to the SL MAC CE is a carrier 1.

Optionally, the method further includes S602: The first UE sends the SL MAC CE by using the first SL resource. Correspondingly, the second UE receives the SL MAC CE from the first UE by using the first SL resource. For the first SL resource, refer to descriptions in the embodiment shown in FIG. 4. If the first SL resource can be used to send the SL MAC CE, for example, the first SL resource can be used to send the SL MAC CE and a subheader of the SL MAC CE, the first UE may send the SL MAC CE by using the first SL resource. Alternatively, if no SL resource can be used to send the SL MAC CE, for example, no SL resource can be used to send the SL MAC CE or the subheader of the SL MAC CE, the first UE may not send the SL MAC CE, or the first UE may send the SL MAC CE after requesting an SL resource from the access network device.

In this embodiment of this application, the second UE can determine, based on the information that is included in the SL MAC CE and that is about the resource corresponding to the SL MAC CE, the resource corresponding to the SL MAC CE. In this way, a constraint relationship between transmission of an SL MAC CE and a carrier is removed. For example, an SL MAC CE corresponding to a carrier 1 may be transmitted on the carrier 1, or may be transmitted on another carrier, so that transmission of the SL MAC CE is more flexible.

It can be learned from the foregoing embodiment that, in this embodiment of this application, the SL MAC CE may be in the first format, or may be in the second format. The following describes a fourth communication method provided in an embodiment of this application. According to the method, a format used by an SL MAC CE may be determined. FIG. 8 is a flowchart of the method.

S801. A first UE determines, based on carrier information, whether a format of an SL MAC CE is a first format or a second format.

When the format of the SL MAC CE is the second format, the SL MAC CE includes information about a resource corresponding to the SL MAC CE. Alternatively, when the format of the SL MAC CE is the first format, the SL MAC CE does not include the information about the resource corresponding to the SL MAC CE. For content such as the resource corresponding to the SL MAC CE and the information about the resource corresponding to the SL MAC CE, refer to related descriptions of S601 in the embodiment shown in FIG. 6.

The carrier information includes, for example, information about a carrier corresponding to the SL MAC CE, and/or includes a quantity of carriers used for communication between the first UE and a second UE. For example, in a manner in which the first UE determines, based on the carrier information, whether the format of the SL MAC CE is the first format or the second format, if a carrier on which a first SL resource is located includes the carrier corresponding to the SL MAC CE, the format of the SL MAC CE is the first format. Otherwise, if the carrier on which the first SL resource is located does not include the carrier corresponding to the SL MAC CE, the format of the SL MAC CE is the second format. The first SL resource is a resource used for SL transmission, for example, an SL resource used to send the SL MAC CE. It may be understood that, if the carrier on which the first SL resource is located includes the carrier corresponding to the SL MAC CE, when the SL MAC CE is transmitted on the first SL resource, the second UE can determine, based on the first SL resource, the carrier corresponding to the SL MAC CE, so that the resource corresponding to the SL MAC CE does not need to be indicated in the SL MAC CE. Therefore, in this case, the SL MAC CE may be in the first format. If the carrier on which the first SL resource is located does not include the carrier corresponding to the SL MAC CE, when the SL MAC CE is transmitted on the first SL resource, the second UE may not be capable of determining, based on the first SL resource, the carrier corresponding to the SL MAC CE. Therefore, the resource corresponding to the SL MAC CE may be indicated in the SL MAC CE. In this case, the SL MAC CE may be in the second format.

Alternatively, for example, in another manner in which the first UE determines, based on the carrier information, whether the format of the SL MAC CE is the first format or the second format, if the carrier on which the first SL resource is located and the carrier corresponding to the SL MAC CE are a same carrier, the format of the SL MAC CE is the first format. Otherwise, if the carrier on which the first SL resource is located and the carrier corresponding to the SL MAC CE are different carriers, the format of the SL MAC CE is the second format. It may be understood that, if the carrier on which the first SL resource is located and the carrier corresponding to the SL MAC CE are a same carrier, when the SL MAC CE is transmitted on the first SL resource, the second UE can determine, based on the first SL resource, the carrier corresponding to the SL MAC CE, so that the resource corresponding to the SL MAC CE does not need to be indicated in the SL MAC CE. Therefore, in this case, the SL MAC CE may be in the first format. If the carrier on which the first SL resource is located and the carrier corresponding to the SL MAC CE are different carriers, when the SL MAC CE is transmitted on the first SL resource, the second UE may not be capable of determining, based on the first SL resource, the carrier corresponding to the SL MAC CE. Therefore, the resource corresponding to the SL MAC CE may be indicated in the SL MAC CE. In this case, the SL MAC CE may be in the second format.

Alternatively, in still another manner in which the first UE determines, based on the carrier information, whether the format of the SL MAC CE is the first format or the second format, if the quantity of carriers used for communication between the first UE and the second UE is 1, the format of the SL MAC CE is the first format. Otherwise, if the quantity of carriers used for communication between the first UE and the second UE is greater than 1, the format of the SL MAC CE is the second format. It may be understood that if the first UE and the second UE communicate with each other by using a single carrier, when the SL MAC CE is transmitted on the first SL resource, the second UE can naturally determine that the SL MAC CE corresponds to the carrier on which the first SL resource is located, so that the resource corresponding to the SL MAC CE does not need to be indicated in the SL MAC CE. Therefore, in this case, the SL MAC CE may be in the first format. If the first UE and the second UE communicate with each other by using a plurality of carriers, when the SL MAC CE is transmitted on the first SL resource, the second UE may not be capable of determining, based on the first SL resource, the carrier corresponding to the SL MAC CE. Therefore, the resource corresponding to the SL MAC CE may be indicated in the SL MAC CE. In this case, the SL MAC CE may be in the second format.

Optionally, any two or three of the foregoing three manners in which the first UE determines the format of the SL MAC CE based on the carrier information may be combined. For example, if the quantity of carriers used for communication between the first UE and the second UE is greater than 1, the first UE may directly determine that the format of the SL MAC CE is the second format, or may determine the format of the SL MAC CE in combination with either of the foregoing two manners. For example, if the carrier on which the first SL resource is located includes the carrier corresponding to the SL MAC CE, the format of the SL MAC CE is the first format. Otherwise, if the carrier on which the first SL resource is located does not include the carrier corresponding to the SL MAC CE, the format of the SL MAC CE is the second format. For another example, if the carrier on which the first SL resource is located and the carrier corresponding to the SL MAC CE are a same carrier, the format of the SL MAC CE is the first format. Otherwise, if the carrier on which the first SL resource is located and the carrier corresponding to the SL MAC CE are different carriers, the format of the SL MAC CE is the second format.

In addition, the first UE may alternatively determine the format of the SL MAC CE in another manner. This is not limited herein. In addition, for content such as information included in the SL MAC CE and the resource corresponding to the SL MAC CE, refer to related descriptions in the embodiment shown in FIG. 4 or the embodiment shown in FIG. 6.

Optionally, the method may further include S802: The first UE sends the SL MAC CE. Correspondingly, the second UE receives the SL MAC CE from the first UE. If the format of the SL MAC CE is the second format, the second UE may obtain the information that is included in the SL MAC CE and that is about the resource corresponding to the SL MAC CE, to determine the resource corresponding to the SL MAC CE. Alternatively, if the format of the SL MAC CE is the first format, the SL MAC CE does not include the information about the resource corresponding to the SL MAC CE. Optionally, if the format of the SL MAC CE is the first format, the second UE may determine, based on a carrier on which the SL MAC CE is received, the information about the resource corresponding to the SL MAC CE. For this, refer to descriptions in the embodiment shown in FIG. 4 or the embodiment shown in FIG. 5. Alternatively, if the format of the SL MAC CE is the first format, and the first UE and the second UE communicate with each other by using a single carrier, the second UE can determine that the SL MAC CE corresponds to the carrier.

In this embodiment of this application, the first UE may determine the format of the SL MAC CE in a corresponding manner, so that the SL MAC CE can be in a more appropriate format. Optionally, the second UE may also determine a format of an SL MAC CE in a same manner as the first UE. Therefore, the first UE and the second UE may have a same understanding of the format of the SL MAC CE, thereby reducing a probability of an indication error.

The embodiment shown in FIG. 8 may be combined with the embodiment shown in FIG. 4 (or the embodiment shown in FIG. 5), or may be combined with the embodiment shown in FIG. 6. For example, in the embodiment shown in FIG. 4 or the embodiment shown in FIG. 5, the first UE may determine, in the manner provided in the embodiment shown in FIG. 8, that a format of an SL MAC CE is the first format. For example, in the embodiment shown in FIG. 4, the first UE may determine, before performing SL LCP, a format of an SL MAC CE in the manner provided in the embodiment shown in FIG. 8. For example, the first UE may determine a format of an SL MAC CE before S401, and all SL MAC CEs since S401 are in the format. Alternatively, the first UE may determine a format of an SL MAC CE in S401 or after S401. For example, the first UE may determine, in S401 or after S401, whether a format of the at least one SL MAC CE is the first format or the second format. Alternatively, the first UE may determine a format of an SL MAC CE in the SL LCP process. For example, in S402, after S402, in S403, after S403, in S404, after S404, in S405, or after S405, the first UE determines whether a format of the first SL MAC CE is the first format or the second format. Alternatively, the first UE may determine a format of an SL MAC CE after the SL LCP process ends.

In the embodiment shown in FIG. 5, the first UE may also determine, in the manner provided in the embodiment shown in FIG. 8, that a format of an SL MAC CE is the second format. For example, in the embodiment shown in FIG. 5, the first UE may determine, before performing SL LCP, a format of an SL MAC CE in the manner provided in the embodiment shown in FIG. 8. For example, the first UE may determine a format of an SL MAC CE before S501, and all SL MAC CEs since S501 are in the format. Alternatively, the first UE may determine a format of an SL MAC CE in S501 or after S501. Alternatively, the first UE may determine a format of an SL MAC CE in the SL LCP process. For example, in S502, after S502, in S503, after S503, in S504, or after S504, the first UE determines whether a format of the first SL MAC CE is the first format or the second format. Alternatively, the first UE may determine a format of an SL MAC CE after the SL LCP process ends.

In the embodiment shown in FIG. 6, the first UE may also determine, in the manner provided in the embodiment shown in FIG. 8, that a format of an SL MAC CE is the second format. For example, in the embodiment shown in FIG. 6, the first UE may determine, before S601, a format of an SL MAC CE in the manner provided in the embodiment shown in FIG. 8, and all SL MAC CEs since S601 are in the format. Alternatively, the first UE may determine, in S601, after S601, in S602, or after S602, whether a format of the first SL MAC CE is the first format or the second format.

Alternatively, the embodiment shown in FIG. 8 is not combined with the foregoing embodiments, but is separately applied.

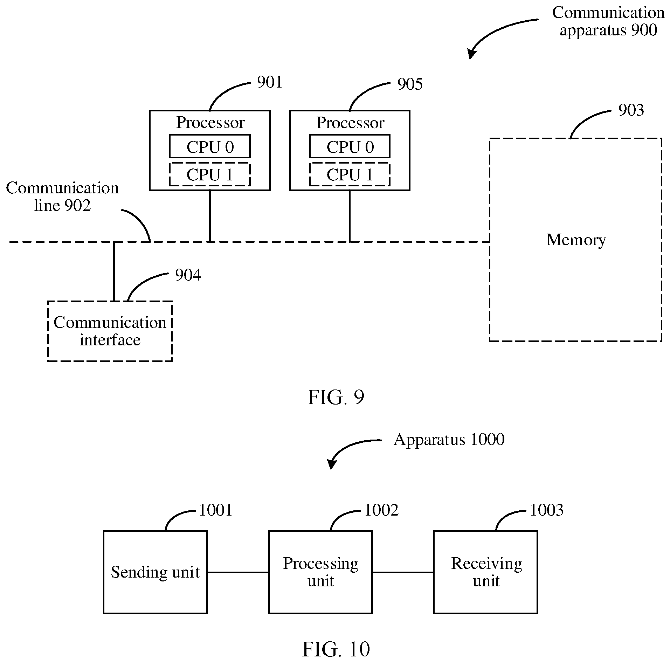

FIG. 9 is a diagram of a structure of a communication apparatus according to an embodiment of this application. The communication apparatus 900 may be the first UE in any one of the embodiments shown in FIG. 4, FIG. 5, FIG. 6, or FIG. 8 or a circuit system of the first UE, and is configured to implement the method corresponding to the first UE in the foregoing method embodiments. For a specific function, refer to descriptions in the foregoing method embodiments. For example, the circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, which may be located at different physical locations, and may be located on different integrated circuits. Optionally, different processors may be integrated into one or more processors, for example, integrated into one or more integrated circuits.

Optionally, the communication apparatus 900 includes one or more memories 903 to store instructions. Optionally, the memory 903 may further store data. The processor and the memory may be separately disposed, or may be integrated.

Optionally, the communication apparatus 900 includes a communication line 902 and at least one communication interface 904. The memory 903, the communication line 902, and the communication interface 904 are all optional, and therefore are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 902 may include a path for transmitting information between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be, but is not limited to, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be used to carry or store expected program code in an instruction or data structure form and can be accessed by a computer. The memory 903 may exist independently, and is connected to the processor 901 by using the communication line 902. Alternatively, the memory 903 may be integrated with the processor 901.

The memory 903 is configured to store computer-executable instructions for executing the solutions in this application, and the processor 901 controls execution. The processor 901 is configured to execute the computer-executable instructions stored in the memory 903, to implement steps performed by the first UE in any one of the embodiments shown in FIG. 4, FIG. 5, FIG. 6, or FIG. 8.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of these processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first UE, the chip includes the processor 901 (and may further include the processor 905), the communication line 902, and the communication interface 904, and optionally, may further include the memory 903. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, refer to FIG. 10, which is a diagram of an apparatus. The apparatus 1000 may be the first UE in the foregoing method embodiments, or a chip in the first UE. The apparatus 1000 includes a sending unit 1001, a processing unit 1002, and a receiving unit 1003.

It should be understood that the apparatus 1000 may be configured to implement steps performed by the first UE in the communication method in embodiments of this application. For related features, refer to any one of the embodiments shown in FIG. 4, FIG. 5, FIG. 6, or FIG. 8. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by using a pin, a circuit, or the like.

This application further provides a computer-readable storage medium. The computer-readable storage medium stores a computer program or instructions. When the computer program or the instructions are run, the method performed by the first UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is enabled to perform the method performed by the first UE in any one of the foregoing method embodiments.

An embodiment of this application further provides a chip system, including a processor, which may be configured to perform operations performed by the first UE in the foregoing method embodiments.

An embodiment of this application further provides a communication system, including the first UE in the foregoing method embodiments. Optionally, the communication system may further include the second UE and/or the access network device in the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a special-purpose computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may be any conventional processor, controller, microcontroller, or state machine. Alternatively, the processor may be implemented by a combination of computing apparatuses, such as a digital signal processor and a microprocessor, a plurality of microprocessors, one or more microprocessors and a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may be connected to a processor, so that the processor may read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different parts of the terminal device.

These computer program instructions may alternatively be loaded onto a computer or another programmable data processing device, so that a series of operations or steps are performed on the computer or the another programmable device, to generate computer-implemented processing. Therefore, the instructions executed on the computer or the another programmable device provide steps for implementing a specified function in one or more procedures in the flowcharts and/or one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the first UE may perform a part of or all steps in embodiments of this application. These steps or operations are merely examples. In embodiments of this application, other operations or variants of various operations may be further performed. In addition, the steps may be performed in an order different from those presented in embodiments of this application, and not all operations in embodiments of this application need to be performed.

## Claims

1. A communication method, wherein the method comprises:
determining at least one sidelink control element based on carrier information, wherein the carrier information comprises information about a carrier corresponding to the at least one sidelink control element, and each of the at least one sidelink control element is a medium access control control element;
determining a first destination address based on the at least one sidelink control element; and
determining a first logical channel and/or a first sidelink control element based on the first destination address.

2. The method according to claim 1, wherein the first sidelink control element belongs to the at least one sidelink control element.

3. The method according to claim 1 or 2, wherein the determining at least one sidelink control element based on carrier information comprises:
determining the at least one sidelink control element based on the carrier information and a first sidelink resource, wherein the first sidelink resource is a resource used for sidelink transmission.

4. The method according to claim 3, wherein the determining the at least one sidelink control element based on the carrier information and a first sidelink resource comprises:
determining that a carrier on which the first sidelink resource is located comprises the carrier corresponding to the at least one sidelink control element; and/or
determining that the carrier corresponding to the at least one sidelink control element and the carrier on which the first sidelink resource is located are a same carrier.

5. The method according to any one of claims 1 to 4, wherein the at least one sidelink control element comprises a second sidelink control element, wherein
a carrier corresponding to the second sidelink control element is a carrier used to transmit sidelink control information SCI; or
the carrier corresponding to the second sidelink control element is a carrier on which sidelink transmission scheduled by the SCI is located, wherein
the SCI indicates the first terminal device to send a sidelink channel state information CSI report, and the sidelink CSI report is comprised in the second sidelink control element.

6. The method according to any one of claims 1 to 4, wherein the at least one sidelink control element comprises a second sidelink control element, wherein
a carrier corresponding to the second sidelink control element is a carrier on which a resource pool associated with inter-user-equipment coordination IUC information is located; or
the carrier corresponding to the second sidelink control element is a carrier on which a resource pool in which a sidelink resource indicated by the IUC information is located is located; or
the carrier corresponding to the second sidelink control element is a carrier used to transmit the IUC information, wherein
the IUC information is comprised in the second sidelink control element.

7. The method according to any one of claims 1 to 4, wherein the at least one sidelink control element comprises a second sidelink control element, wherein
a carrier corresponding to the second sidelink control element is a carrier on which a resource pool associated with the IUC request is located; or
the carrier corresponding to the second sidelink control element is a carrier on which a resource pool in which a sidelink resource indicated by the IUC request is located is located; or
the carrier corresponding to the second sidelink control element is a carrier used to transmit the IUC request, wherein
the IUC request is comprised in the second sidelink control element, and the IUC request is used to request a reception end of the second sidelink control element to send IUC information.

8. The method according to any one of claims 1 to 7, wherein the determining a first destination address based on the at least one sidelink control element comprises:
determining the first destination address based on a priority of the at least one sidelink control element.

9. The method according to claim 8, wherein the determining the first destination address based on a priority of the at least one sidelink control element comprises:
determining the first destination address based on the priority of the at least one sidelink control element and a priority of a to-be-sent logical channel.

10. The method according to any one of claims 1 to 9, wherein the method further comprises:
allocating the first sidelink resource to the first logical channel and/or the first sidelink control element, wherein the first sidelink resource is a resource used for sidelink transmission; and
sending the first logical channel and/or the first sidelink control element.

11. The method according to any one of claims 1 to 10, wherein the method further comprises:
performing carrier reselection or carrier selection to re-determine a carrier.

12. The method according to claim 11, wherein the re-determined carrier comprises the carrier corresponding to the at least one sidelink control element.

13. The method according to claim 11 or 12, wherein the carrier reselection or selection process is completed in first duration, the first duration is duration corresponding to a first timer, and the first timer indicates a validity period of a sidelink control element.

14. The method according to claim 11 or 12, wherein the carrier reselection or selection process is completed in second duration, the second duration is duration corresponding to a second timer, the duration corresponding to the second timer is greater than duration corresponding to a first timer, and the first timer indicates a validity period of a sidelink control element.

15. The method according to any one of claims 1 to 14, wherein the method further comprises:
determining, based on the carrier information, that a format of the first sidelink control element is a first format, wherein in the first format, the first sidelink control element does not comprise information about a resource corresponding to the first sidelink control element.

16. A communication method, wherein the method comprises:
determining a first destination address based on a to-be-sent logical channel and/or sidelink control element; and
determining, based on carrier information, a first sidelink control element from a sidelink control element associated with the first destination address, wherein the carrier information comprises information about a carrier corresponding to the first sidelink control element, and the first sidelink control element is a medium access control control element.

17. The method according to claim 16, wherein the determining, based on carrier information, a first sidelink control element from a sidelink control element associated with the first destination address comprises:
determining, based on the carrier information and a first sidelink resource, the first sidelink control element from the sidelink control element associated with the first destination address.

18. The method according to claim 17, wherein the determining, based on the carrier information and a first sidelink resource, the first sidelink control element from the sidelink control element associated with the first destination address comprises:
determining that a carrier on which the first sidelink resource is located comprises the carrier corresponding to the first sidelink control element; and/or
determining that the carrier corresponding to the first sidelink control element and the carrier on which the first sidelink resource is located are a same carrier.

19. The method according to any one of claims 16 to 18, wherein
the carrier corresponding to the first sidelink control element is a carrier used to transmit SCI; or
the carrier corresponding to the first sidelink control element is a carrier on which sidelink transmission scheduled by the SCI is located, wherein
the SCI indicates the first terminal device to send a sidelink CSI report, and the sidelink CSI report is comprised in the first sidelink control element.

20. The method according to any one of claims 16 to 18, wherein
the carrier corresponding to the first sidelink control element is a carrier on which a resource pool associated with IUC information is located; or
the carrier corresponding to the first sidelink control element is a carrier on which a resource pool in which a sidelink resource indicated by the IUC information is located is located; or
the carrier corresponding to the first sidelink control element is a carrier used to transmit the IUC information, wherein
the IUC information is comprised in the first sidelink control element.

21. The method according to any one of claims 16 to 18, wherein
the carrier corresponding to the first sidelink control element is a carrier on which a resource pool associated with the IUC request is located; or
the carrier corresponding to the first sidelink control element is a carrier on which a resource pool in which a sidelink resource indicated by the IUC request is located is located; or
the carrier corresponding to the first sidelink control element is a carrier used to transmit the IUC request, wherein
the IUC request is comprised in the first sidelink control element, and the IUC request is used to request a reception end of the first sidelink control element to send IUC information.

22. The method according to any one of claims 16 to 21, wherein the determining a first destination address based on a to-be-sent logical channel and/or sidelink control element comprises:
determining the first destination address based on a priority of the to-be-sent logical channel and/or sidelink control element.

23. The method according to any one of claims 16 to 22, wherein the method further comprises:
allocating the first sidelink resource to the first sidelink control element, wherein the first sidelink resource is a resource used for sidelink transmission; and
sending the first sidelink control element.

24. The method according to any one of claims 16 to 23, wherein the method further comprises:
performing carrier reselection or carrier selection to re-determine a carrier.

25. The method according to claim 24, wherein the re-determined carrier comprises the carrier corresponding to the first sidelink control element.

26. The method according to claim 24 or 25, wherein the carrier reselection or selection process is completed in first duration, the first duration is duration corresponding to a first timer, and the first timer indicates a validity period of the first sidelink control element.

27. The method according to claim 24 or 25, wherein the carrier reselection or selection process is completed in second duration, the second duration is duration corresponding to a second timer, the duration corresponding to the second timer is greater than duration corresponding to a first timer, and the first timer indicates a validity period of the first sidelink control element.

28. The method according to any one of claims 16 to 27, wherein the method further comprises:
determining, based on the carrier information, that a format of the first sidelink control element is a second format, wherein in the second format, the first sidelink control element comprises information about a resource corresponding to the first sidelink control element.

29. A communication apparatus, comprising:
a processing unit, configured to determine at least one sidelink control element based on carrier information, wherein the carrier information comprises information about a carrier corresponding to the at least one sidelink control element, and each of the at least one sidelink control element is a medium access control control element, wherein
the processing unit is further configured to determine a first destination address based on the at least one sidelink control element; and
the processing unit is further configured to determine a first logical channel and/or a first sidelink control element based on the first destination address.

30. The communication apparatus according to claim 29, wherein the first sidelink control element belongs to the at least one sidelink control element.

31. The communication apparatus according to claim 29 or 30, wherein the processing unit is configured to determine the at least one sidelink control element based on the carrier information in the following manner:
determining the at least one sidelink control element based on the carrier information and a first sidelink resource, wherein the first sidelink resource is a resource used for sidelink transmission.

32. The communication apparatus according to claim 31, wherein the processing unit is configured to determine the at least one sidelink control element based on the carrier information and the first sidelink resource in the following manner:
determining that a carrier on which the first sidelink resource is located comprises the carrier corresponding to the at least one sidelink control element; and/or
determining that the carrier corresponding to the at least one sidelink control element and the carrier on which the first sidelink resource is located are a same carrier.

33. The communication apparatus according to any one of claims 29 to 32, wherein the at least one sidelink control element comprises a second sidelink control element, wherein
a carrier corresponding to the second sidelink control element is a carrier used to transmit sidelink control information SCI; or
the carrier corresponding to the second sidelink control element is a carrier on which sidelink transmission scheduled by the SCI is located, wherein
the SCI indicates the first terminal device to send a sidelink channel state information CSI report, and the sidelink CSI report is comprised in the second sidelink control element.

34. The communication apparatus according to any one of claims 29 to 32, wherein the at least one sidelink control element comprises a second sidelink control element, wherein
a carrier corresponding to the second sidelink control element is a carrier on which a resource pool associated with inter-user-equipment coordination IUC information is located; or
the carrier corresponding to the second sidelink control element is a carrier on which a resource pool in which a sidelink resource indicated by the IUC information is located is located; or
the carrier corresponding to the second sidelink control element is a carrier used to transmit the IUC information, wherein
the IUC information is comprised in the second sidelink control element.

35. The communication apparatus according to any one of claims 29 to 32, wherein the at least one sidelink control element comprises a second sidelink control element, wherein
a carrier corresponding to the second sidelink control element is a carrier on which a resource pool associated with the IUC request is located; or
the carrier corresponding to the second sidelink control element is a carrier on which a resource pool in which a sidelink resource indicated by the IUC request is located is located; or
the carrier corresponding to the second sidelink control element is a carrier used to transmit the IUC request, wherein
the IUC request is comprised in the second sidelink control element, and the IUC request is used to request a reception end of the second sidelink control element to send IUC information.

36. The communication apparatus according to any one of claims 29 to 35, wherein the processing unit is configured to determine the first destination address based on the at least one sidelink control element in the following manner:
determining the first destination address based on a priority of the at least one sidelink control element.

37. The communication apparatus according to claim 36, wherein the processing unit is configured to determine the first destination address based on the priority of the at least one sidelink control element in the following manner:
determining the first destination address based on the priority of the at least one sidelink control element and a priority of a to-be-sent logical channel.

38. The communication apparatus according to any one of claims 29 to 37, wherein the communication apparatus further comprises a sending unit, wherein
the processing unit is further configured to allocate the first sidelink resource to the first logical channel and/or the first sidelink control element, wherein the first sidelink resource is a resource used for sidelink transmission; and
the sending unit is configured to send the first logical channel and/or the first sidelink control element.

39. The communication apparatus according to any one of claims 29 to 38, wherein the processing unit is further configured to perform carrier reselection or carrier selection to re-determine a carrier.

40. The communication apparatus according to claim 39, wherein the re-determined carrier comprises the carrier corresponding to the at least one sidelink control element.

41. The communication apparatus according to claim 39 or 40, wherein the carrier reselection or selection process is completed in first duration, the first duration is duration corresponding to a first timer, and the first timer indicates a validity period of a sidelink control element.

42. The communication apparatus according to claim 39 or 40, wherein the carrier reselection or selection process is completed in second duration, the second duration is duration corresponding to a second timer, the duration corresponding to the second timer is greater than duration corresponding to a first timer, and the first timer indicates a validity period of a sidelink control element.

43. The communication apparatus according to any one of claims 29 to 42, wherein the processing unit is further configured to determine, based on the carrier information, that a format of the first sidelink control element is a first format, wherein in the first format, the first sidelink control element does not comprise information about a resource corresponding to the first sidelink control element.

44. A communication apparatus, comprising:
a processing unit, configured to determine a first destination address based on a to-be-sent logical channel and/or sidelink control element, wherein
the processing unit is further configured to determine, based on carrier information, a first sidelink control element from a sidelink control element associated with the first destination address, wherein the carrier information comprises information about a carrier corresponding to the first sidelink control element, and the first sidelink control element is a medium access control control element.

45. The communication apparatus according to claim 44, wherein the processing unit is configured to determine, in the following manner based on the carrier information, the first sidelink control element from the sidelink control element associated with the first destination address:
determining, based on the carrier information and a first sidelink resource, the first sidelink control element from the sidelink control element associated with the first destination address.

46. The communication apparatus according to claim 45, wherein the processing unit is configured to determine, in the following manner based on the carrier information and the first sidelink resource, the first sidelink control element from the sidelink control element associated with the first destination address:
determining that a carrier on which the first sidelink resource is located comprises the carrier corresponding to the first sidelink control element; and/or
determining that the carrier corresponding to the first sidelink control element and the carrier on which the first sidelink resource is located are a same carrier.

47. The communication apparatus according to any one of claims 44 to 46, wherein
the carrier corresponding to the first sidelink control element is a carrier used to transmit SCI; or
the carrier corresponding to the first sidelink control element is a carrier on which sidelink transmission scheduled by the SCI is located, wherein
the SCI indicates the first terminal device to send a sidelink CSI report, and the sidelink CSI report is comprised in the first sidelink control element.

48. The communication apparatus according to any one of claims 44 to 46, wherein
the carrier corresponding to the first sidelink control element is a carrier on which a resource pool associated with IUC information is located; or
the carrier corresponding to the first sidelink control element is a carrier on which a resource pool in which a sidelink resource indicated by the IUC information is located is located; or
the carrier corresponding to the first sidelink control element is a carrier used to transmit the IUC information, wherein
the IUC information is comprised in the first sidelink control element.

49. The communication apparatus according to any one of claims 44 to 46, wherein
the carrier corresponding to the first sidelink control element is a carrier on which a resource pool associated with the IUC request is located; or
the carrier corresponding to the first sidelink control element is a carrier on which a resource pool in which a sidelink resource indicated by the IUC request is located is located; or
the carrier corresponding to the first sidelink control element is a carrier used to transmit the IUC request, wherein
the IUC request is comprised in the first sidelink control element, and the IUC request is used to request a reception end of the first sidelink control element to send IUC information.

50. The communication apparatus according to any one of claims 44 to 49, wherein the processing unit is configured to determine the first destination address based on the to-be-sent logical channel and/or sidelink control element in the following manner:
determining the first destination address based on a priority of the to-be-sent logical channel and/or sidelink control element.

51. The communication apparatus according to any one of claims 44 to 50, wherein the communication apparatus further comprises a sending unit, wherein
the processing unit is further configured to allocate the first sidelink resource to the first sidelink control element, wherein the first sidelink resource is a resource used for sidelink transmission; and
the sending unit is configured to send the first sidelink control element.

52. The communication apparatus according to any one of claims 44 to 51, wherein the processing unit is further configured to perform carrier reselection or carrier selection to re-determine a carrier.

53. The communication apparatus according to claim 52, wherein the re-determined carrier comprises the carrier corresponding to the first sidelink control element.

54. The communication apparatus according to claim 52 or 53, wherein the carrier reselection or selection process is completed in first duration, the first duration is duration corresponding to a first timer, and the first timer indicates a validity period of the first sidelink control element.

55. The communication apparatus according to claim 52 or 53, wherein the carrier reselection or selection process is completed in second duration, the second duration is duration corresponding to a second timer, the duration corresponding to the second timer is greater than duration corresponding to a first timer, and the first timer indicates a validity period of the first sidelink control element.

56. The communication apparatus according to any one of claims 44 to 55, wherein the processing unit is further configured to determine, based on the carrier information, that a format of the first sidelink control element is a second format, wherein in the second format, the first sidelink control element comprises information about a resource corresponding to the first sidelink control element.

57. A communication apparatus, comprising a processor, wherein the processor is configured to execute one or more computer programs stored in a memory, to enable the communication apparatus to perform the method according to any one of claims 1 to 15 or the method according to any one of claims 16 to 28.

58. The communication apparatus according to claim 57, wherein the communication apparatus further comprises the memory.

59. A communication apparatus, comprising a module configured to perform the method according to any one of claims 1 to 15, or a module configured to perform the method according to any one of claims 16 to 28.

60. A chip system, wherein the chip system comprises a logic circuit and an input/output interface, the input/output interface is configured to communicate with a communication apparatus other than the chip system, and the logic circuit is configured to perform the method according to any one of claims 1 to 15 or the method according to any one of claims 16 to 28.

61. A communication system, comprising a first terminal device configured to perform the method according to any one of claims 1 to 15, or a first terminal device configured to perform the method according to any one of claims 16 to 28.

62. A computer-readable storage medium, wherein the computer-readable storage medium is configured to store a computer program, and when the computer program is run on a computer, the computer is enabled to perform the method according to any one of claims 1 to 15 or the method according to any one of claims 16 to 28.

63. A computer program product, wherein the computer program product comprises a computer program, and when the computer program is run on a computer, the computer is enabled to perform the method according to any one of claims 1 to 15 or the method according to any one of claims 16 to 28.
